(19) **Europäisches Patentamt / European Patent Office / Office européen des brevets**

(11) **EP 4 383 659 A1**

(12) **EUROPEAN PATENT APPLICATION**
published in accordance with Art. 153(4) EPC

(43) Date of publication:
**12.06.2024 Bulletin 2024/24**

(21) Application number: **22852620.8**

(22) Date of filing: **06.05.2022**

(51) International Patent Classification (IPC):
**H04L 27/26** (2006.01)    **H04L 1/08** (2006.01)
**H04W 72/04** (2023.01)    **H04W 72/56** (2023.01)

(52) Cooperative Patent Classification (CPC):
**H04L 1/08; H04L 27/26; H04W 72/04**

(86) International application number:
**PCT/JP2022/019551**

(87) International publication number:
**WO 2023/013191 (09.02.2023 Gazette 2023/06)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **02.08.2021 JP 2021126687**

(71) Applicant: **Panasonic Intellectual Property Corporation of America**
**Torrance, CA 90504 (US)**

(72) Inventors:
• **YAMAMOTO, Tetsuya**
  **Kadoma-shi, Osaka 571-0057 (JP)**
• **SUZUKI, Hidetoshi**
  **Kadoma-shi, Osaka 571-0057 (JP)**

(74) Representative: **Grünecker Patent- und Rechtsanwälte**
**PartG mbB**
**Leopoldstraße 4**
**80802 München (DE)**

(54) **COMMUNICATION DEVICE, AND COMMUNICATION METHOD**

(57)    This communication device is provided with: a control circuit for determining a read-out position of encoded data of a signal, in a first sector among a plurality of sectors in a time domain resource allocated to transmission of the signal, on the basis of a resource amount that does not depend on the result of a read-out of encoded data in a second sector before the first sector; and a transmission circuit for transmitting the signal on the basis of the read-out position.

200

FIG. 9

EP 4 383 659 A1

**Description**

Technical Field

The present disclosure relates to a communication apparatus and a communication method.

Background Art

In recent years, a dramatic growth of Internet of Things (IoT) has been expected with the expansion and diversification of radio services as a background. The usage of mobile communication is extending to all fields such as automobiles, houses, home electric appliances, or industrial equipment in addition to information terminals such as smart phones. In order to support the diversification of services, a substantial improvement in the performance and function of mobile communication systems has been required for various requirements such as an increase in the number of connected devices or low latency in addition to an increase in system capacity. The 5th generation mobile communication systems (5G) has features of enhanced mobile broadband (eMBB), massive machine type communication (mMTC), and ultra reliable and low latency communication (URLLC), and can flexibly provide radio communication in response to a wide variety of needs, by using these features.

The 3rd Generation Partnership Project (3GPP) as an international standardizing body has been specifying New Radio (NR) as one of 5G radio interfaces.

Citation List

Non-Patent Literature

NPL 1
3GPP TS38.104 V15.14.0, "NR Base Station (BS) radio transmission and reception (Release 15)," June 2021.
NPL 2
3GPP TSG RAN Meeting #90e, RP-202928, "New WID on NR coverage enhancements," China Telecom, December 2020.
NPL 3
3GPP TS38.211 V16.6.0, "NR Physical channels and modulation (Release 16)," June 2021.
NPL 4
3GPP TS38.212 V16.6.0, "NR Multiplexing and channel coding (Release 16)," June 2021.
NPL 5 3GPP TS38.213 V16.6.0, "NR Physical layer procedures for control (Release 16)," June 2021.
NPL 6
3GPP TS38.214 V16.6.0, "NR Physical layer procedures for data (Release 16)," June 2021.
NPL 7
3GPP TS38.331 V16.5.0, "NR Radio Resource Control (RRC) protocol specification (Release 16)," June 2021.
NPL 8
3GPP TSG RAN WG1 #105-e, R1-2106251, "Final FL summary of TB processing over multi-slot PUSCH (AI 8.8.1.2)," Moderator (Nokia, Nokia Shanghai Bell), May 2021.
NPL 9
3GPP TSG RAN WG1 #104-bis-e, R1-2104686, "TB processing over multi-slot PUSCH," Qualcomm Incorporated, May 2021.
NPL 10
3GPP TSG RAN WG1 #105-e, R1-2104242, "Discussion on TB processing over multi-slot PUSCH," Huawei, HiSilicon, May 2021.

Summary of Invention

Technical Problem

However, there is scope for further study on a method of improving the communication efficiency in uplink.
One non-limiting and exemplary embodiment of the present disclosure facilitates providing a communication apparatus and a communication method each capable of improving the communication efficiency in uplink.
A communication apparatus according to an exemplary embodiment of the present disclosure includes: control circuitry, which, in operation, determines a reading position of encoded data of a signal in a first section of a plurality of sections in a time-domain resource allocated for transmission of the signal, based on a resource amount that does not depend on a reading result of the encoded data in a second section before the first section; and transmission circuitry, which, in operation, transmits the signal, based on the reading position.

It should be noted that general or specific embodiments may be implemented as a system, a method, an integrated circuit, a computer program, a storage medium, or any selective combination thereof.

According to an exemplary embodiment of the present disclosure, it is possible to improve the communication efficiency in uplink.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

Brief Description of Drawings

FIG. 1 illustrates an exemplary time-domain resource configuring Transport Block processing over Multi-Slot Physical Uplink Shared Channel (TBoMS);
FIG. 2 illustrates an example of TBoMS using Rate matching in Option 1;
FIG. 3 illustrates an example of TBoMS using Rate matching in Option 2;
FIG. 4 illustrates an example of TBoMS using Rate matching in Option 3;
FIG. 5 illustrates an example of TBoMS using Rate matching in Option 2 to which a variable Redundancy Version (RV) position is applied;
FIG. 6 is a block diagram illustrating an exemplary configuration focused on part of a base station;
FIG. 7 is a block diagram illustrating an exemplary configuration focused on part of a terminal;
FIG. 8 is a block diagram illustrating an exemplary configuration of the base station;
FIG. 9 is a block diagram illustrating an exemplary configuration of the terminal;
FIG. 10 is a flowchart describing an exemplary transmission operation in the terminal;
FIG. 11 illustrates an example of TBoMS using Rate matching according to Embodiment 1;
FIG. 12 illustrates another example of TBoMS using the Rate matching according to Embodiment 1;
FIG. 13 illustrates an example of TBoMS using Rate matching according to Embodiment 2;
FIG. 14 illustrates an exemplary Special slot;
FIG. 15 illustrates another exemplary time-domain resource configuring TBoMS;
FIG. 16 illustrates an example of association of RV field values and RV positions;
FIG. 17 illustrates an exemplary architecture of a 3GPP NR system;
FIG. 18 schematically illustrates a functional split between Next Generation-Radio Access Network (NG-RAN) and 5th Generation Core (5GC);
FIG. 19 is a sequence diagram of a Radio Resource Control (RRC) connection setup/reconfiguration procedure;
FIG. 20 schematically illustrates usage scenarios of enhanced Mobile BroadBand (eMBB), massive Machine Type Communications (mMTC), and Ultra Reliable and Low Latency Communications (URLLC); and
FIG. 21 is a block diagram illustrating an exemplary 5G system architecture for a non-roaming scenario.

Description of Embodiments

Hereinafter, embodiments of the present disclosure will be described in detail with reference to the accompanying drawings.

In NR, for example, in addition to a frequency band of 6 GHz or less, mainly within 700 MHz to 3.5 GHz band (e.g., may be referred to as Frequency Range 1 (FR1)), which is used for cellular communication, a millimeter-wave band such as 28 GHz or 39 GHz band capable of ensuring a wide band (e.g., may be referred to as FR2) can be utilized (e.g., see Non-Patent Literature (hereinafter referred to as "NPL") 1). Further, for example, in FR1, a high frequency band is possibly used compared with the frequency band used in Long Term Evolution (LTE) or 3rd Generation mobile communication systems (3G) such as 3.5 GHz band. The higher the frequency band is, the greater a radio wave propagation loss is likely to be, and thus, the received quality of radio waves is susceptible to deterioration. Hence, in NR, for example, it is expected to ensure almost the same communication area (or coverage) as in the Radio Access Technology (RAT) such LTE or 3G, in other words, to ensure an appropriate communication quality when the high frequency band is used compared with LTE or 3G. In one example, in Release 17 (e.g., referred to as "Rel. 17"), a method of improving the coverage in NR has been studied (e.g., see NPL 2).

In NR, for example, a terminal (also referred to as, e.g., User Equipment (UE)) transmits and receives data in accordance with resource allocation indicated by at least one of a downlink control signal (e.g., Downlink Control Information (DCI)) in a physical layer (layer 1) transmitted via a downlink control channel (e.g., Physical Downlink Control Channel (PDCCH)) from a base station (also referred to as, e.g., gNB) and Radio Resource Control (RRC) corresponding to layer 3 (e.g., see NPLs 3 to 7).

In uplink, for example, the terminal transmits an uplink data channel (e.g., Physical Uplink Shared Channel (PUSCH)) in accordance with the resource allocation (e.g., Grant or UL grant) from the base station. Information on the resource allocation included in at least one of the DCI and RRC may include, for example, information on a time-domain resource with which PUSCH is transmitted. For example, the information on the time-domain resource may include information (e.g., K2) on the timing (e.g., slot offset) from the slot in which the terminal has received PDCCH to the slot in which the terminal transmits PUSCH, information on a first symbol position of PUSCH in a slot or the number of symbols for transmitting PUSCH.

In uplink transmission in NR, a method of transmitting the same information more than once (also referred to as Repetition) is supported. For example, in Release 15 (expressed as, e.g., "Rel. 15"), slot-by-slot Repetition called "PUSCH repetition Type A" is specified, and in Release 16 (expressed as, e.g., "Rel. 16"), Repetition called "PUSCH repetition Type B" which allows transmission of a plurality of PUSCHs in one slot is specified. For example, the PUSCH repetition Type B can achieve low latency as compared with the PUSCH repetition Type A.

In the PUSCH repetition Type A, for example, the same time resource allocation is applied over consecutive multiple slots. In the PUSCH repetition Type A, a base station indicates, to a terminal, the time resource allocation in a slot and the number of slots for repetition (hereinafter referred to as repetition slots), for example. Here, the number of repetition slots may be, for example, a value that is counted based on consecutive slots.

In the PUSCH repetition Type B, the base station may indicate, to the terminal, a time-domain resource for a first (initial) PUSCH transmission and the number of repetitions, for example. In time-domain resource allocation for the second and subsequent PUSCH transmissions, symbols may be allocated, which are consecutive to and in number identical to the preceding PUSCH transmission, for example.

In the PUSCH repetition Type A, the number of repetition slots to be indicated is a value counted based on consecutive slots, so that the number of slots for actually transmitting PUSCH may be less than the number of indicated repetition slots.

Therefore, in Rel. 17, as a functional extension of PUSCH repetition Type A, for example, it has been studied to make the number of repetition slots a value that is counted based on an uplink slot available for PUSCH transmission.

Besides, in Rel. 15 and Rel. 16 (may also be referred to as, e.g., "Rel. 15/16"), for example, regardless of the presence or absence of Repetition, a data size or a transport block size (TBS) is determined based on a resource amount in units of slots (hereinafter may also be referred to as "a slot unit") or based on a resource amount allocated for an initial PUSCH transmission in Repetition (e.g., resource amount allocated for PUSCH transmission in first slot (head slot) in Repetition) (e.g., see NPL 6). Incidentally, the resource amount may be represented by, for example, the number of symbols or the number of resource elements (REs). Further, the TBS may be described as a TB size.

Meanwhile, in Rel. 17, when PUSCH is transmitted using multiple slots, studies have been carried on a method in which a TBS is determined by multiplying a TBS calculated from a resource amount in units of slots or a resource amount allocated for an initial PUSCH transmission in Repetition by a scaling factor that is greater than one. PUSCH transmission for transmitting, in the multiple slots, a TB of the TBS determined by this method is also referred to as "TB processing over multi-slot PUSCH (TBoMS)" or "TBoMS transmission."

In TBoMS, for example, as in the PUSCH repetition Type A, it has been studied to allocate the same time-resource over multiple slots. Additionally, it has been also studied that a parameter for determining the number of slots to be used for TBoMS is included in, for example, an information element (IE) of RRC that configures information on a time-domain resource with which PUSCH is transmitted.

For example, the IE of RRC that configures the information on the time-domain resource with which PUSCH is transmitted may be "PUSCH-TimeDomainResourceAllocation IE" (see NPL 8). The PUSCH-TimeDomainResourceAllocation may include, for example, information on the timing (e.g., slot offset) from the slot in which PDCCH has been received to the slot in which PUSCH is transmitted, and a parameter for the PUSCH first-symbol position in a slot, the number of symbols for transmitting PUSCH, or the number of TBoMS slots. For example, candidates for combinations of these parameters (referred to as, e.g., "TDRA list" or "TDRA table") may be configured. The terminal, for example, may use few-bit of the DCI or RRC that assigns the corresponding PUSCH so as to select, from the candidates for the combination of the plurality of parameters, one parameter combination that is actually used by the terminal for PUSCH transmission.

Further, in TBoMS, it has been studied to at least perform TBoMS transmission using non-consecutive slots in time division duplex (TDD). Note that, in a time-domain resource (e.g., slot) allocated for TBoMS, a section (group) composed of one slot or a plurality of slots that are consecutive may be referred to as "Transmission Occasion for TBoMS (TOT)" (e.g., see NPL 8). The time-domain resource allocated for TBoMS can be composed of one or a plurality of TOTs.

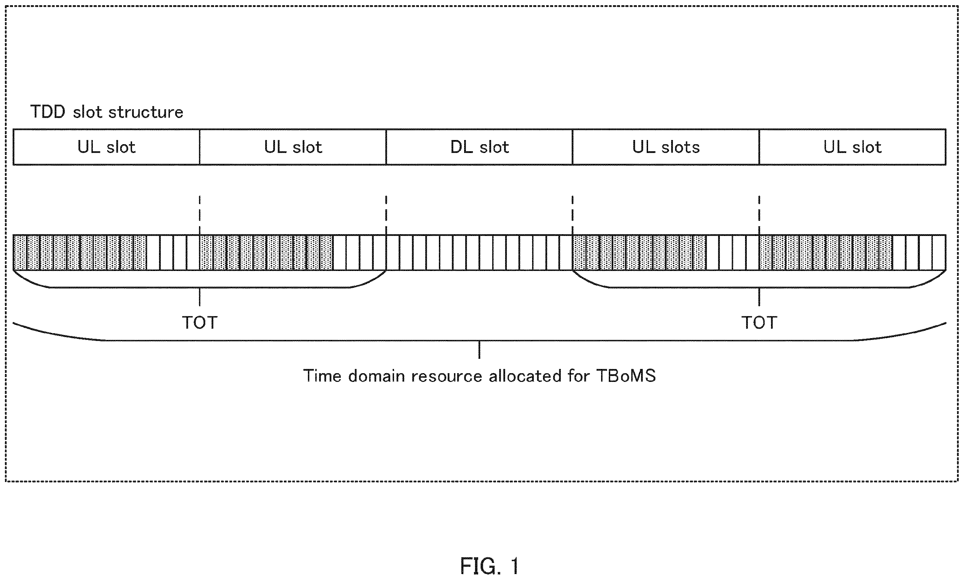

FIG. 1 illustrates an exemplary time-domain resource allocated for TBoMS of a case where the number of slots allocated for TBoMS is four slots and the number of consecutive slots composing a TOT is two slots. In FIG. 1, the time-domain resource allocated for TBoMS is composed of two TOTs (total four slots).

[Regarding Rate Matching using Circular Buffer]

In NR, for example, a Circular Buffer is used in retransmission control. The Circular Buffer is a memory that stores therein encoder outputs (e.g., encoded data or encoded bits including systematic bits and parity bits) and reads the encoder outputs of the number of bits corresponding to an allocated resource amount from a specified reading start position (Redundancy Version (RV)) in the Circular Buffer. The reading operation of an encoded bit from a specified RV in the Circular Buffer in accordance with an allocated-resource amount may also be called "Rate matching."

In Rel. 15/16, for example, four RV positions are specified in a Circular Buffer. In Rel. 15/16, RV positions specified in the Circular Buffer are fixed positions regardless of an allocated-resource amount. For example, in TBoMS, the following three methods (Option 1, Option 2, and Option 3) can be used as a method of mapping, to a plurality of slots, encoded bits for the TB generated by the above-mentioned method.

<Option 1>

Option 1 is a method in which a time-domain resource allocated for TBoMS (also referred to as, e.g., "TBoMS resource") is configured as a unit for the Rate-matching (hereinafter may also be referred to as Rate-matching unit).

For example, Option 1 is a method of reading, from a specified RV position, encoded bits of the number of bits corresponding to a resource amount of a slot (e.g., multiple slots, or one or a plurality of TOTs) used for TBoMS transmission and of mapping the read encoded bits to a TBoMS resource over multiple slots. In Option 1, for example, a single RV position is used to read the encoded bits.

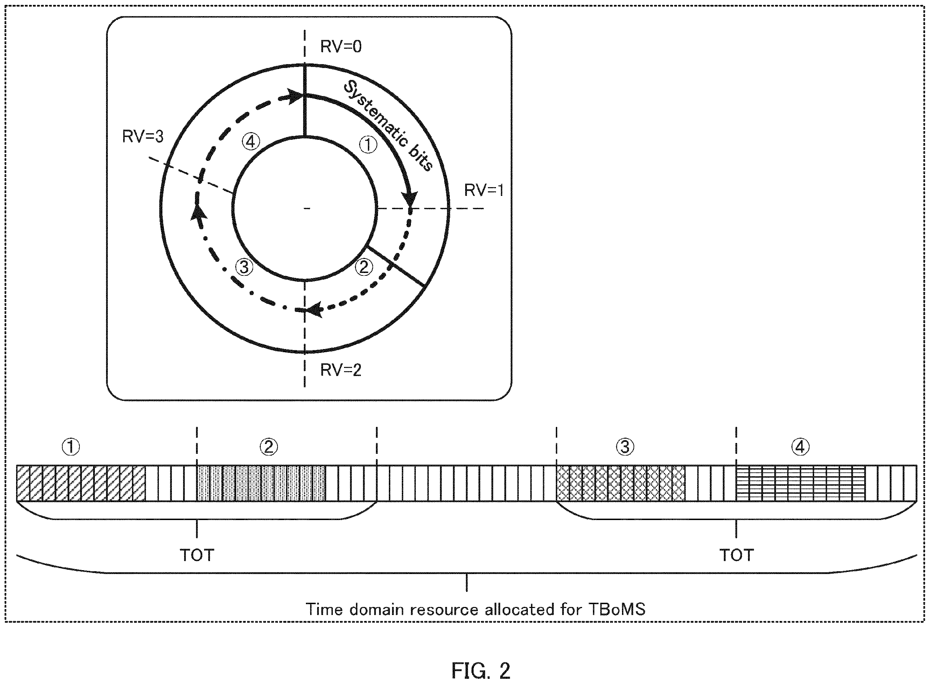

FIG. 2 illustrates an example of TBoMS using Rate matching in Option 1. In FIG. 2, as an example, a TBoMS resource includes two TOTs each composed of two slots (e.g., total four slots). In the example illustrated in FIG. 2, the terminal may read, from the specified RV position in the Circular Buffer (RV = 0, or sometimes referred to as RV0), the number of bits corresponding to the resource amount of the four slots allocated for TBoMS and then map the number of read encoded bits to the TBoMS resource over the four slots.

In Option 1, for example, the encoded bits of the number of bits corresponding to the TBoMS resource amount are read sequentially from a single RV position, so that all encoded bits stored in the Circular Buffer are likely to be transmitted in the TBoMS resource and a coding gain is thus sufficiently acquired, which is advantageous in obtaining a superior decoding performance.

Meanwhile, in Option 1, for example, when the Rate-matching unit is a time resource allocated for TBoMS, a plurality of slots allocated for TBoMS is taken into account in calculation of the number of bits corresponding to an allocated-resource amount and in bit-interleaving processing. Thus, in Option 1, since processing of the Rate-matching may be started based on the resource amount for the plurality of slots, the processing latency in the terminal is likely to increase. For example, when TBoMS is transmitted using non-consecutive slots as illustrated in FIG. 2, the impact of processing latency in the terminal may be more noticeable.

Further, for example, in a case where a time-domain resource for the TBoMS transmission collides with a transmission resource for an Uplink Control Channel (e.g., Physical Uplink Control Channel (PUCCH)) via which uplink control information (e.g., Uplink Control Information (UCI)) is transmitted, the terminal may transmit the UCI by multiplexing with TBoMS. In this case, in Option 1, since the terminal starts processing of the Rate-matching taking into account UCI to be multiplexed with a later slot allocated for TBoMS, for example, the processing latency is likely to increase.

Further, for example, also in a case where a time-domain resource for the TBoMS transmission collides with a resource indicated by uplink-transmission cancellation indication (e.g., Uplink Link Cancellation Indication (UL CI)) or in a case where a time-domain resource for the TBoMS transmission collides with allocation of high-priority uplink transmission, the processing latency in the terminal is likely to increase.

Incidentally, for example, a unit for collision processing can be replaced from a slot to a time-domain resource allocated for TBoMS. In this case, for example, a slot in which the collision processing can be performed (e.g., called reference slot) is configured to a first slot allocated for TBoMS, which may cause limitation on a terminal-processing timeline.

<Option 2>

Option 2 is a method in which a slot is configured as the Rate-matching unit.

For example, Option 2 is a method of reading, from a specified RV position, encoded bits of the number of bits corresponding to the resource amount allocated for PUSCH transmission in each slot used for TBoMS transmission and of individually mapping the read encoded bits to resource in the slots. In Option 2, for example, the RV positions used to read the encoded bits may be different from one another. In other words, in Option 2, an RV position may be configured (e.g., changed) for each slot.

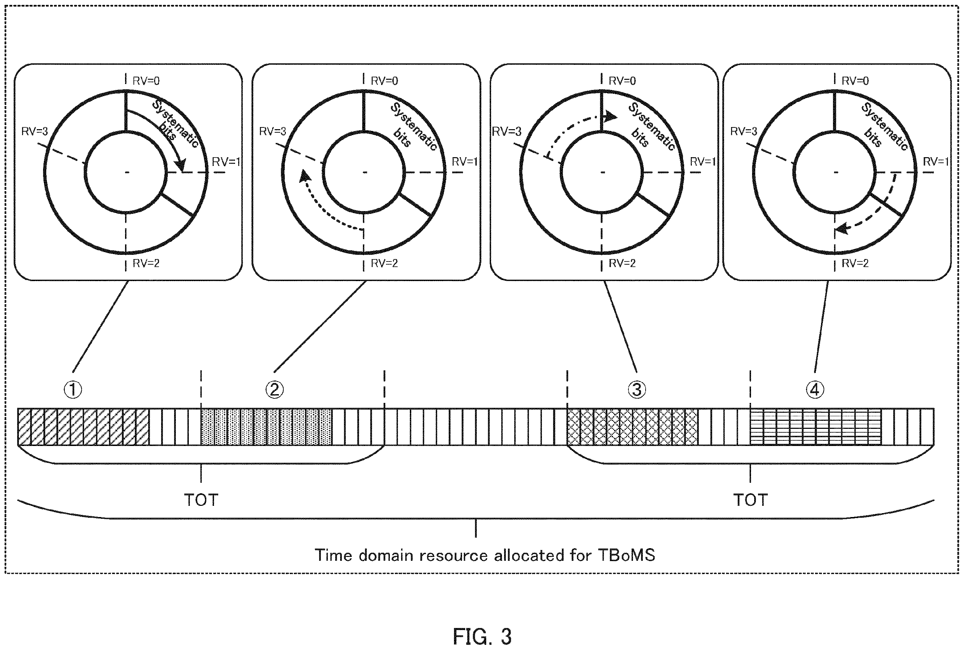

FIG. 3 illustrates an example of TBoMS using Rate matching in Option 2. In FIG. 3, as an example, a TBoMS resource includes two TOTs each composed of two slots (e.g., total four slots). In the example illustrated in FIG. 3, in each of the four slots allocated for TBoMS, the terminal may read the number of bits corresponding to the resource amount of each slot from a specified RV position in the Circular Buffer configured for the slot (e.g., any of RV = 0 (RV0), RV = 2 (RV2), RV = 3 (RV3), and RV = 1 (RV1)) and then map the number of read encoded bits to the resource in the slot.

In Option 2, for example, the terminal need not start processing of the Rate matching based on resource amounts of a plurality of slots and can perform slot-by-slot processing. Thus, Option 2 is effective in terms of, for example, supporting non-consecutive slots or facilitating handling of the collision processing, which can suppress an increase in the processing latency in the terminal. Additionally, in Option 2, for example, the slot-by-slot processing is possible in the collision processing, and a slot in which the collision processing can be performed (e.g., reference slot) is configured to a slot where a collision may occur, which causes no limitation on the terminal-processing timeline.

Meanwhile, in Option 2, as illustrated in FIG. 3, when encoded bits are read from the existing four RV positions such as in Rel. 15/16, for example, all encoded bits are less likely to be transmitted in the TBoMS transmission. For example, the higher the coding rate is, the less the number of encoded bits to be read will be, and thus, all encoded bits are more likely to be not transmitted in the TBoMS transmission. Therefore, in Option 2, it is difficult to obtain a coding gain, and decoding performance is likely to decrease.

<Option 3>

Option 3 is a method in which a TOT is configured as the Rate-matching unit.

For example, Option 3 is a method of reading, from a specified RV position, encoded bits of the number of bits corresponding to the resource amount of each TOT in TBoMS and then individually map the read encoded bits to a resource in the TOT. In Option 3, for example, the RV positions used to read the encoded bits may be different from one another. In other words, in Option 3, an RV position may be configured (e.g., changed) for each TOT.

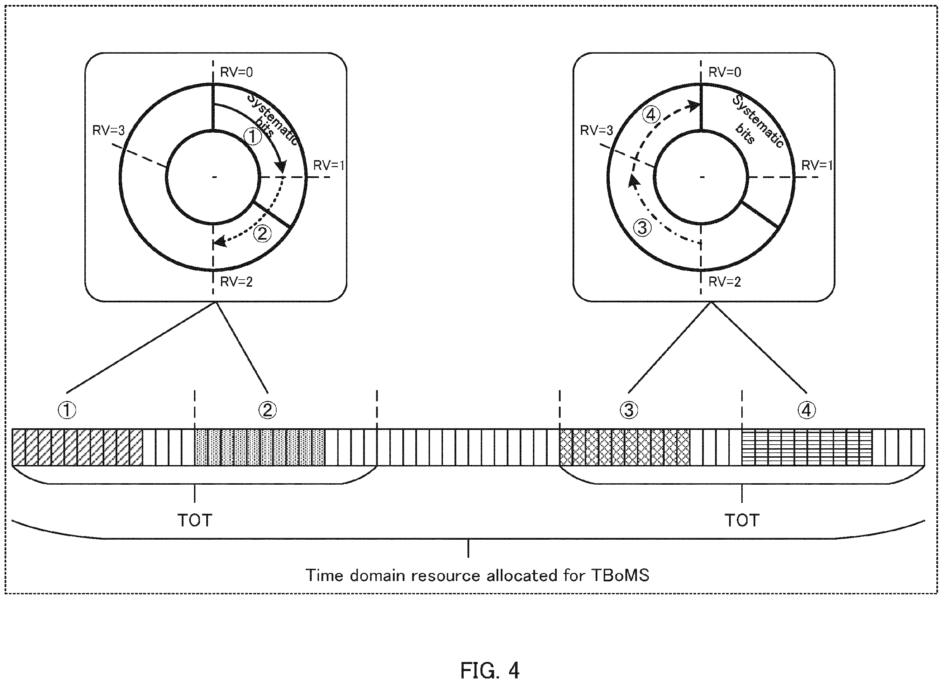

FIG. 4 illustrates an example of TBoMS using Rate matching in Option 3. In FIG. 4, as an example, a TBoMS resource includes two TOTs each composed of two slots (e.g., total four slots). In the example illustrated in FIG. 4, in each of the two TOTs allocated for TBoMS, the terminal may read the number of bits corresponding to the resource amount of each TOT (e.g., two slots) from a specified RV position in the Circular Buffer configured for the TOT (e.g., any of RV = 0 (RV0) and RV = 2 (RV2)) and then map the number of read encoded bits to the resource in the TOT.

In Option 3, for example, since the Rate-matching unit is shorter than that in Option 1, the impact of processing latency in the terminal can be reduced. Further, in Option 3, for example, as compared with Option 2, it is possible to suppress a decrease in the decoding performance due to more (e.g., all) encoded bits being not transmitted.

On the other hand, in Option 3, for example, when a TOT is composed of multiple slots as illustrated in FIG. 4, the multiple slots is taken into account in handling of the collision processing as in Option 31 hence, the processing latency is likely to increase, and limitation may be caused on the terminal-processing timeline, as compared with Option 2.

Option 1, Option 2, and Option 3 have been each described, thus far.

In Rel. 15/16, for example, four RV positions (e.g., RV0, RV1, RV2, and RV3) are specified in a Circular Buffer, and the RV positions in the Circular Buffer are fixed positions regardless of an allocated-resource amount. When Option 1, Option 2, and Option 3 are applied by using the existing RV positions specified in Rel. 15/16, there is a trade-off relationship between the decoding performance and the processing latency or the complexity of the collision processing, as mentioned above.

For example, a method of setting an RV position to be variable is given as a method of maintaining the slot-by-slot processing in Option 2 and of suppressing a decrease in the decoding performance (e.g., see NPL 9 and NPL 10).

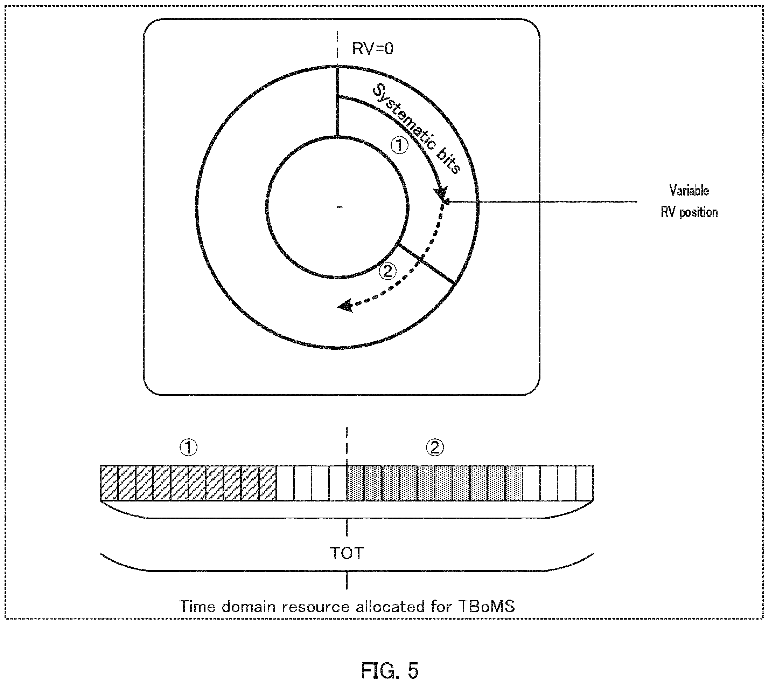

FIG. 5 illustrates an exemplary method of Rate matching in which a variable RV position (also referred to as "continuous RV" or "floating RV") is applied to Option 2. As illustrated in FIG. 5, in Option 2 with the variable RV position applied, the terminal may, for example, read, from a variable RV position, encoded bits of the number of bits corresponding to a resource amount allocated for PUSCH transmissions in each slot and then individually map the read encoded bits to a resource in the slot.

Here, the terminal may hold the number of encoded bits that has been read in each slot and determine, based on the number of held encoded bits, an RV position at which encoded bits are read in the next slot. For example, an RV position, $s_n$, in the n-th slot composing a TOT (e.g., reading start bit position on Circular Buffer) may be given by the following Equation 1:

$$s_n = l_{n-1} + 1 \qquad \text{... (Equation 1).}$$

Here, $l_{n-1}$ indicates the last bit position on the Circular Buffer of the encoded bits read in the (n-1)-th slot. That is, the RV position, $s_n$, in the n-th slot may be configured to the bit position next to the last bit position on the Circular Buffer of the encoded bits read in the (n-1)-th slot.

Option 2 with the variable RV position applied makes it easier for the terminal to transmit consecutive bit sequences on the Circular Buffer even when the slot-by-slot Rate matching is performed, thus suppressing the decrease in the decoding performance described in Option 2, for example. Further, in Option 2 with the variable RV position applied, since the Rate-matching unit can be a slot, the slot-by-slot processing can be maintained as in Option 2, which is advantageous in achieving reduction in the processing latency and simplification of the collision processing, as compared with Option 1 or Option 3.

Here, for example, since an RV position is fixed in Option 2 with the fixed RV position applied, as long as the terminal can obtain information on a resource amount allocated for PUSCH transmission in a slot to which the Rate matching is applied, the terminal can start processing of the Rate matching regardless of the number of encoded bits to be read in a slot positioned before this slot. In other words, in Option 2 with the fixed RV position applied, the Rate-matching processing can be started, in each of a plurality of slots allocated for TBoMS, without waiting for processing of the Rate matching in a preceding slot.

On the other hand, in Option 2 with the variable RV position applied, in each of the plurality of slots allocated for TBoMS, an RV position at which encoded bits are read (reading start bit position on Circular Buffer) depends on a result of the Rate-matching processing in a preceding slot (e.g., the number of read encoded bits or the last bit position). Therefore, in Option 2 with the variable RV position applied, the terminal identifies the number of read encoded bits in a slot positioned before a slot to which the Rate matching is applied, and then starts processing of the Rate matching in this slot. In other words, the Rate-matching processing in the slot to which the Rate matching is applied is not started until the number of read encoded bits in a slot positioned before this slot is identified.

Thus, in Option 2 with the variable RV position applied, the processing latency in the terminal is likely to increase, as compared with Option 2 with the fixed RV position applied.

Besides, for example, in a slot positioned before a slot to which the Rate matching is applied, the following cases may arise: a case where a time-domain resource for TBoMS collides with a transmission resource for PUCCH that transmits a UCI and the UCI is thus multiplexed with a PUSCH resource; a case where the time-domain resource for TBoMS collides with a resource indicated by UL CI and PUSCH is thus dropped; or a case where the time-domain resource for TBoMS collides with allocation of high-priority uplink transmission and PUSCH is thus dropped.

In these cases, in Option 2 with the variable RV position applied, an RV position at which encoded bits are read in a certain slot (e.g., reading start bit position on Circular Buffer) may be affected by a result of the UCI multiplexing in a slot positioned before this slot, dropping of PUSCH transmission due to UL CI, or dropping PUSCH transmission due to the allocation of the high-priority uplink transmission. This suggests that, for example, an RV position at which encoded bits are read from a Circular Buffer depends on a DCI that assigns a downlink data channel (e.g., Physical Downlink Shared Channel (PDSCH)) corresponding to the UCI to be multiplexed, a DCI that transmits UL CI, or a DCI that assigns high-priority uplink transmission, in addition to the DCI that assigns a corresponding TBoMS.

For example, when an mis-detection of these DCIs occurs in the terminal, inconsistency in RV positions at which encoded bits are read from a Circular Buffer may arise between the base station and the terminal. Therefore, when the mis-detection of these DCIs occurs in the terminal, the decoding performance may significantly degrade. Meanwhile, in the base station, processing such as blind decoding taking into account the mis-detection of the DCIs in the terminal can be performed, but in this case, the decoding processing of the base station may be complicated.

In a non-limiting example of the present disclosure, a description will be given of an uplink-signal transmission method that suppresses an increase in processing latency and is robust against an mis-detection of a DCI in TBoMS.

For example, in a non-limiting example of the present disclosure, in TBoMS, a degradation in the decoding performance may be suppressed by applying a variable RV position to slot-by-slot Rate matching processing. Further, in a non-limiting example of the present disclosure, a variable RV position (reading start bit position on Circular Buffer) in each slot for TBoMS may be determined based on the number of encoded bits calculated from a resource (e.g., "reference resource (reference resource usage)" that does not depend on a result of Rate-matching processing in a slot positioned before this slot. In the manner described above, an increase in the processing latency in the terminal can be suppressed, the degradation in the decoding performance can also be suppressed even when an mis- detection of a DCI in the terminal occurs, and the complicated decoding processing of the base station can be avoided.

(Embodiment 1)

[Overview of Communication System]

A communication system according to each embodiment of the present disclosure includes base station 100 and terminal 200.

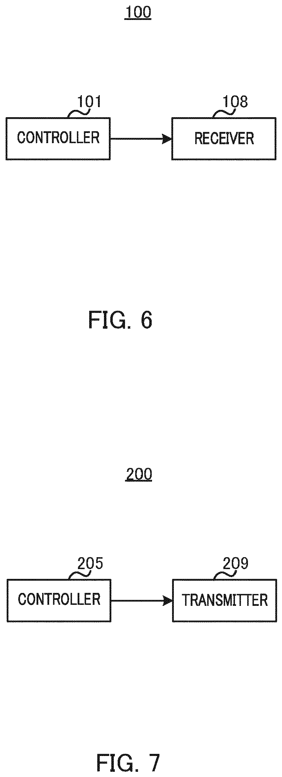

FIG. 6 is a block diagram illustrating an exemplary configuration focused on part of base station 100 (e.g., corresponding to communication apparatus) according to an exemplary embodiment of the present disclosure. In base station 100 illustrated in FIG. 6, controller 101 (e.g., corresponding to control circuitry) determines a reading position (e.g., RV position) of encoded data of a signal (PUSCH) in a first section of a plurality of sections (e.g., slots) in a time-domain resource (e.g., TBoMS resource or resource in TOT) allocated for transmission of the signal, based on a resource amount (e.g., reference resource) that does not depend on a reading result (Rate-matching result) of encoded data in a second section before the first section. Receiver 108 (e.g., corresponding to reception circuitry) receives the signal, based on the reading position.

FIG. 7 is a block diagram illustrating an exemplary configuration focused on part of terminal 200 (e.g., corresponding to communication apparatus) according to an exemplary embodiment of the present disclosure. In terminal 200 illustrated in FIG. 7, controller 205 (e.g., corresponding to control circuitry) determines a reading position of encoded data of a signal in a first section of a plurality of sections in a time-domain resource allocated for transmission of the signal, based on a resource amount that does not depend on a reading result of encoded data in a second section before the first section. Transmitter 209 (e.g., corresponding to transmission circuitry) transmits the signal, based on the reading position.

[Configuration of Base Station]

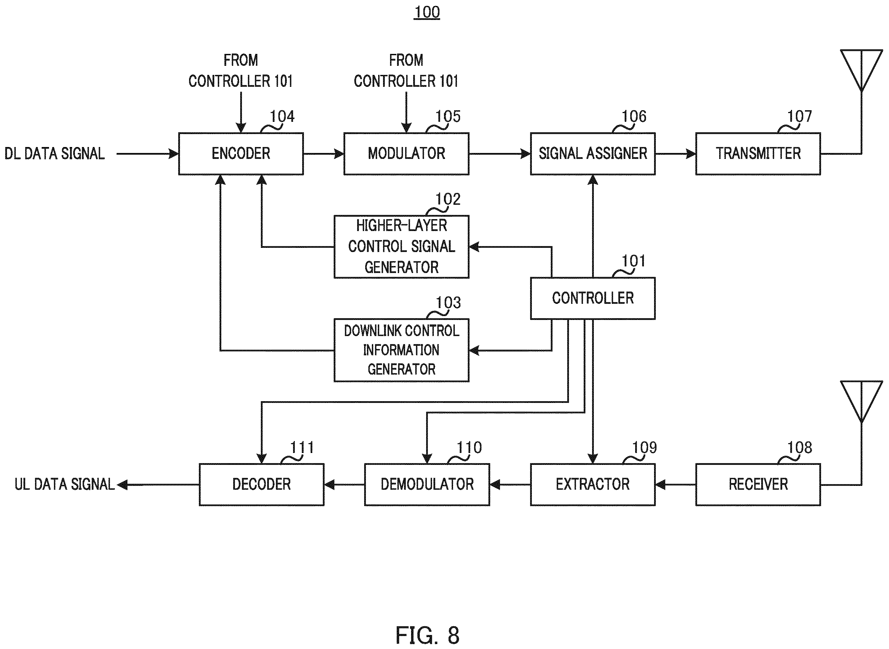

FIG. 8 is a block diagram illustrating an exemplary configuration of base station 100 according to Embodiment 1. In FIG. 8, base station 100 includes controller 101, higher-layer control signal generator 102, downlink control information generator 103, encoder 104, modulator 105, signal assigner 106, transmitter 107, receiver 108, extractor 109, demodulator 110, and decoder 111.

Controller 101 determines, for example, information on reception of a downlink data signal (e.g., PDSCH) for terminal 200 and information on transmission of an uplink data signal (e.g., PUSCH), and outputs the determined information to higher-layer control signal generator 102. The information on the reception of the downlink data signal and the information on the transmission of the uplink data signal may include, for example, information on time-domain resource allocation (e.g., information on TDRA table) or information on TBoMS (e.g., information on the number of transmission slots).

Moreover, controller 101 determines, for example, information (e.g., coding and modulation scheme (MCS) and radio resource allocation) on a downlink signal for transmitting a downlink data signal, a higher-layer control signal, or downlink control information, and outputs the determined information to encoder 104, modulator 105, and signal assigner 106. Controller 101 also outputs, for example, the information on the downlink signal (e.g., data signal or higher-layer control signal) to downlink control information generator 103.

Further, controller 101 determines information (e.g., MCS and radio resource allocation) on transmission of an uplink data signal (e.g., PUSCH) in terminal 200, for example. Controller 101 outputs the determined information on the uplink data signal to downlink control information generator 103, extractor 109, demodulator 110, and decoder 111, for example. Besides, controller 101 may determine, based on a method described later, a TBS for TBoMS and at least one of RV positions in a plurality of slots included in TBoMS, and output the determined information to decoder 111, for example.

Higher-layer control signal generator 102, for example, generates a higher-layer control signal bit sequence based on the information inputted from controller 101 and outputs the higher-layer control signal bit sequence to encoder 104.

Downlink control information generator 103, for example, generates a downlink control information (e.g., DCI) bit sequence based on the information inputted from controller 101 and outputs the generated DCI bit sequence to encoder 104. Note that the control information may be transmitted to a plurality of terminals.

Encoder 104, for example, encodes downlink data (e.g., DL data signal), the bit sequence inputted from higher-layer control signal generator 102, or the DCI bit sequence inputted from downlink control information generator 103, based on the information inputted from controller 101. Encoder 104 outputs the encoded bit sequence to modulator 105.

Modulator 105, for example, modulates the encoded bit sequence inputted from encoder 104, based on the information inputted from controller 101, and outputs the modulated signal (e.g., symbol sequence) to signal assigner 106.

Signal assigner 106 maps, to a radio resource, the symbol sequence (including, e.g., downlink data signal or control signal) inputted from modulator 105, based on the information indicating the radio resource inputted from controller 101, for example. Signal assigner 106 outputs, to transmitter 107, a downlink signal to which the signal is mapped.

Transmitter 107, for example, performs transmission-waveform generation processing such as orthogonal Frequency Division Multiplexing (OFDM) on the signal inputted from signal assigner 106. In addition, for example, in the case of an OFDM transmission in which a cyclic prefix (CP) is added, transmitter 107 performs Inverse Fast Fourier Transform (IFFT) processing on the signal, and adds the CP to the signal resulting from the IFFT. Moreover, transmitter 107 performs RF processing such as D/A conversion and/or up-conversion on the signal and transmits the resulting radio signal to terminal 200 via an antenna.

Receiver 108, for example, performs RF processing such as down-conversion and/or A/D conversion on an uplink signal from terminal 200 received via an antenna. Further, in the case of the OFDM transmission, receiver 108 performs Fast Fourier Transform (FFT) processing on the received signal and outputs the resulting frequency-domain signal to extractor 109.

Extractor 109, for example, extracts, from the received signal inputted from receiver 108, based on the information inputted from controller 101, a radio resource part with which the uplink data signal (e.g., PUSCH) has been transmitted and then outputs the extracted radio resource part to demodulator 110.

Demodulator 110, for example, demodulates, based on the information inputted from controller 101, the uplink data signal (e.g., PUSCH) inputted from extractor 109. Demodulator 110, for example, outputs a demodulation result to decoder 111.

Decoder 111, for example, performs error correction decoding on the uplink data signal (e.g., PUSCH), based on the information inputted from controller 101 and the demodulation result inputted from demodulator 110, thereby obtaining a reception bit sequence (e.g., UL data signal) after the decoding.

[Configuration of Terminal]

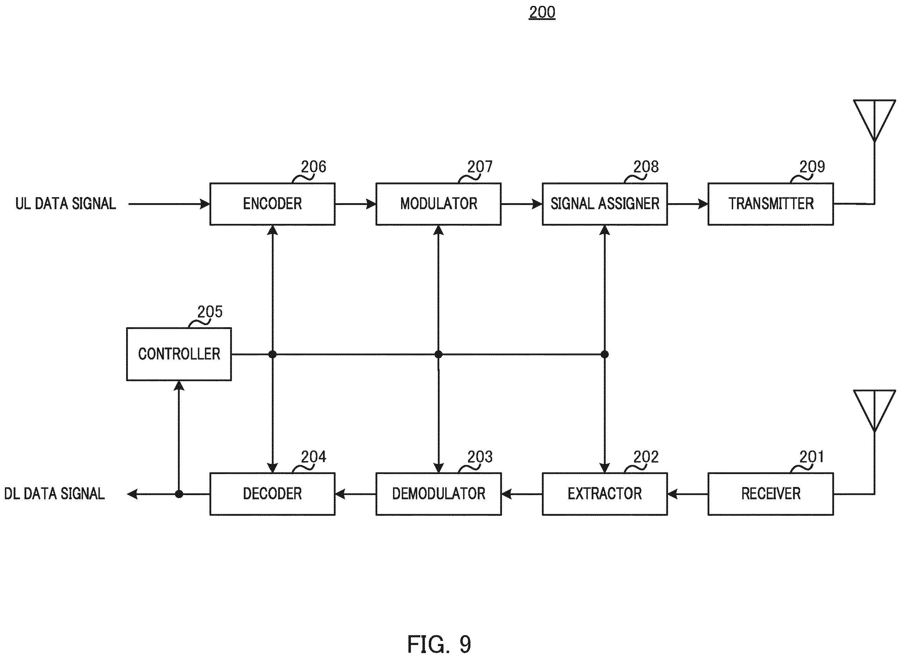

FIG. 9 is a block diagram illustrating an exemplary configuration of terminal 200 according to an exemplary embodiment of the present disclosure. For example, in FIG. 9, terminal 200 includes receiver 201, extractor 202, demodulator 203, decoder 204, controller 205, encoder 206, modulator 207, signal assigner 208, and transmitter 209.

Receiver 201, for example, receives a downlink signal (e.g., downlink data signal or downlink control information) from base station 100 via an antenna and performs the RF processing such as the down-conversion and/or the A/D conversion on the received radio signal, thereby obtains a received signal (baseband signal). Further, in the case of receiving an OFDM signal, receiver 201 performs the FFT processing on the received signal to convert the received signal into that in the frequency domain. Receiver 201 outputs the received signal to extractor 202.

Extractor 202, for example, extracts a radio resource part that may include the downlink control information from the received signal inputted from receiver 201, based on information on the radio resource for the downlink control information inputted from controller 205, and then outputs the radio resource part to demodulator 203. Further, extractor 202 extracts a radio resource part that includes downlink data, based on information on the radio resource for a data signal inputted from controller 205, and then outputs the radio resource part to demodulator 203.

Demodulator 203, for example, based on the information inputted from controller 205, demodulates the signal (e.g., PDCCH or PDSCH) inputted from extractor 202 and outputs a demodulation result to decoder 204.

Decoder 204, for example, based on the information inputted from controller 205, performs error correction decoding on PDCCH or PDSCH, using the demodulation result inputted from demodulator 203, thereby obtaining downlink reception data, a higher-layer control signal, or downlink control information, for example. Decoder 204 outputs the higher-layer control signal and the downlink control information to controller 205, and outputs the downlink reception data. Further, decoder 204 may generate a response signal (e.g., ACK/NACK), based on the decoding result of the downlink reception.

Controller 205, for example, determines a radio resource for at least one of PDSCH reception and PUSCH transmission, based on the signal inputted from decoder 204 (e.g., higher-layer control signal and downlink control information). Controller 205 outputs the determined information to extractor 202, demodulator 203, encoder 206, modulator 207, and signal assigner 208, for example.

Further, controller 205 may determine, based on a method described later, a TBS for TBoMS and at least one of RV positions in a plurality of slots included in TBoMS, and output the determined information to encoder 206, modulator 207, and signal assigner 208, for example.

Encoder 206, for example, performs error correction encoding on an uplink data signal, based on the information inputted from controller 205. Encoder 206 outputs the encoded bit sequence to modulator 207.

Modulator 207, for example, based on the information inputted from controller 205, modulates the encoded bit sequence inputted from encoder 206 and outputs the modulated signal (symbol sequence) to signal assigner 208.

Signal assigner 208, for example, based on the information inputted from controller 205, maps the signal inputted from modulator 207 to a radio resource. Signal assigner 208 outputs, to transmitter 209, the uplink signal to which the signal is mapped.

Transmitter 209, for example, performs transmission signal-waveform generation such as OFDM on the signal inputted from signal assigner 208. In addition, in the case of the OFDM transmission using the CP, for example, transmitter 209 performs the IFFT processing on the signal and adds the CP to the signal after the IFFT. Alternatively, when transmitter 209 generates a single-carrier waveform, a Discrete Fourier Transformer (DFT) may be additionally provided at a rear stage of modulator 207 or a front stage of signal assigner 208 (neither is illustrated) , for example. Moreover, transmitter 209, for example, performs the RF processing such as the D/A conversion and/or the up-conversion on a transmission signal and transmits the resulting radio signal to base station 100 via an antenna.

[Exemplary Operations of Base Station 100 and Terminal 200]

Exemplary operations of base station 100 and terminal 200 having the above configurations will be described.

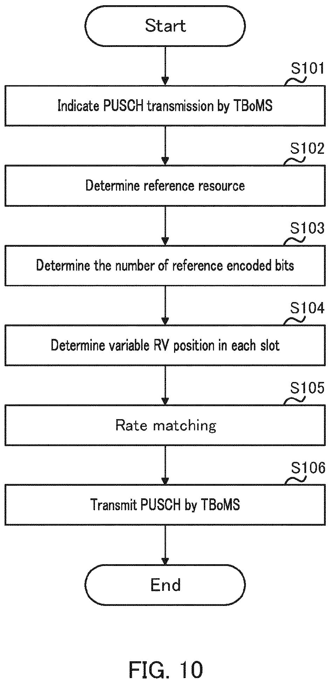

FIG. 10 is a flowchart describing an exemplary operation related to TBoMS transmission in terminal 200.

<S101>

In FIG. 10, terminal 200 receives, from base station 100, an indication relating to PUSCH transmission by TBoMS (e.g., resource allocation information on TBoMS transmission).

<S102>

Terminal 200, for example, determines a resource or a resource amount (hereinafter may also be referred to as "reference resource") used for determination of the RV position (reading start bit position in Circular Buffer) in each of a plurality of slots included in TBoMS.
The reference resource may be, for example, a resource amount that does not depend on a result of Rate matching (reading result) of encoded data in a slot positioned before a slot in which the Rate matching is performed. In other words, the reference resource may be a resource to be determined without taking into account a factor that may vary between slots. By way of example, the reference resource may be a resource amount that does not depend on the presence or absence of UCI multiplexing. Alternatively, the reference resource may be a resource amount that does not depend on, for example, whether PUSCH transmission is dropped due to dynamic SFI indication (dynamic SFI), UL CI, or allocation of high-priority uplink transmission.
For example, the reference resource may be a resource amount (e.g., the number of REs) allocated for PUSCH transmission in the first slot in a TOT. As an example, a resource amount of the reference resource (e.g., referred to as "reference resource amount"), $N_{RE}$, may be calculated based on the following Equation 2 or Equation 3:

$$N_{RE} = \min(156, N_{RE}^{'})\, n_{PRB} \qquad \text{... (Equation 2)};$$

and

$$N_{RE} = N_{RE}^{'} \cdot n_{PRB} \qquad \text{... (Equation 3).}$$

In Equation 2, the upper limit of the number of REs in a slot is set to 156, for example. Note that the upper limit value of the number of REs in the slot is not limited to 156 and may be other values.
In Equation 2 and Equation 3, $n_{PRB}$ is the number of resource blocks (e.g., the number of Physical Resource Blocks (PRBs)) allocated for TBoMS transmission. Further, in Equation 2 and Equation 3, $N'_{RE}$ may be calculated based on, for example, the following Equation 4:

$$N_{RE}^{'} = N_{sc}^{RB} N_{symbol}^{sh} - N_{DMRS}^{PRB} - N_{oh}^{PRB} \qquad \text{... (Equation 4).}$$

The following are used, herein:

$N_{sc}^{RB}$ : Number of subcarriers per resource block (e.g., 12);

$N_{symbol}^{sh}$ : Number of OFDM symbols allocated for PUSCH transmission in first slot in TOT;

$N_{DMRS}^{RPB}$ : Number of Demodulation Reference Signal (DMRS) resource elements allocated for PUSCH transmission in first slot in TOT; and

$N_{oh}^{PRB}$ : Overhead factor indicated to terminal 200 by RRC.

For example, the number of OFDM symbols allocated for the PUSCH transmission in the first slot in the TOT may be indicated to terminal 200 by information on a symbol length of time-domain resource allocation (TDRA).

<S103>

Terminal 200, for example, determines (e.g., calculates) the number of encoded bits corresponding to the reference resource (hereinafter may also be referred to as "the number of reference encoded bits").

The number of reference encoded bits corresponding to the reference resource, $N_{ref}$, may be calculated, for example, by using the reference resource amount, $N_{RE}$, calculated by Equation 2 or Equation 3, based on the following Equation 5:

$$N_{ref} = N_{RE} \cdot Q_m \cdot v \qquad ... \text{(Equation 5)}.$$

The following are used, herein:

$Q_m$: Modulation order; and
u: Number of MIMO layers.

<S104>

Terminal 200 determines the RV position (e.g., variable RV position) in each slot, based on, for example, the number of reference encoded bits and the slot index (e.g., "n") of each slot included in TBoMS (or TOT).

Terminal 200 may, for example, configure an RV position (reading start bit position on Circular Buffer) in the first slot in the TOT to an existing RV position (e.g., any of RV0, RV1, RV2, and RV3) defined in Rel. 15/16.

Moreover, terminal 200 may determine, for example, an RV position in a slot positioned after the first slot in the TOT, based on the number of reference encoded bits, $N_{ref}$, and the slot index, n, of this slot in the TOT. For example, an RV position, $s_n$, in the n-th slot (e.g., slot index, n) composing a TOT may be given by the following Equation 6:

$$s_n = N_{RV_x} + n \cdot N_{ref} \qquad ... \text{(Equation 6)}.$$

Here, $N_{RVx}$ is the RV position used in the first slot in the TOT (e.g., bit position specified by RV0, RV1, RV2, or RV3).

Thus, terminal 200 determines the RV position in each slot based on the number of reference encoded bits corresponding to the reference resource, $N_{ref}$, and the index of each slot. In other words, terminal 200 determines the RV position in each slot without depending on a Rate matching result in a slot positioned before this slot.

<S105>

Terminal 200 performs, based on the determined RV position, the Rate matching in each slot. For example, terminal 200 may read, from the RV position (variable RV position) that has been determined for each slot, the number of reference encoded bits corresponding to the reference resource (the number of bits corresponding to resource amount allocated for PUSCH transmission in first slot in TOT), and then map the read encoded bits to the PUSCH resource for the slot.

<S106>

Terminal 200 transmits PUSCH by TBoMS, for example.

The exemplary operation related to TBoMS transmission in terminal 200 has been described, thus far.

Thus, in the present embodiment, terminal 200 uniquely determines the RV position in each slot in a TOT (e.g., reading start bit position on Circular Buffer) without depending on a Rate-matching result in a slot positioned before this slot, for example.

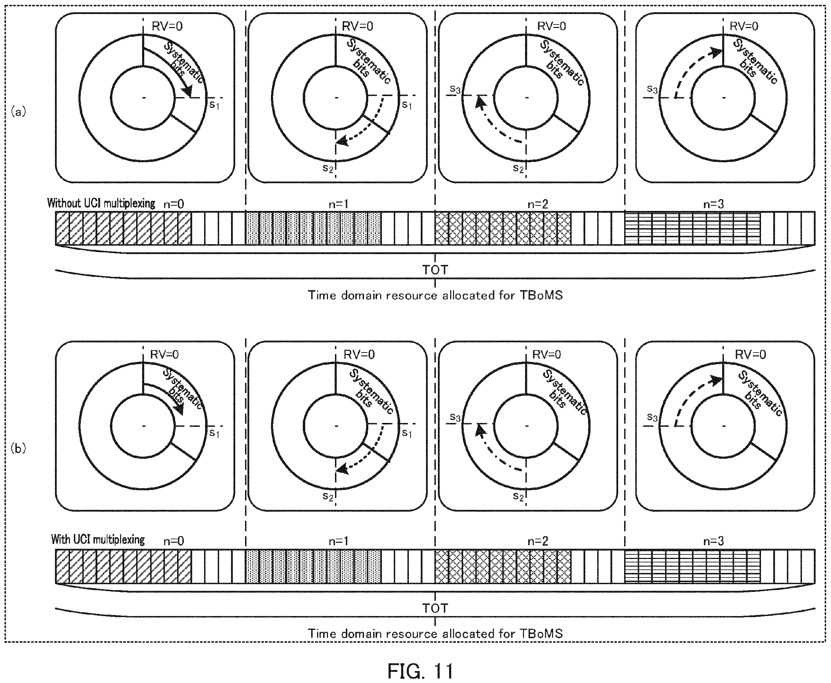

FIG. 11 illustrates an example of TBoMS using Rate matching according to the present embodiment. In FIG. 11, as an example, the number of slots included in TBoMS is four, and the number of TOTs is one (e.g., four slots).

As illustrated in FIG. 11, terminal 200 may, for example, configure an RV position (reading start bit position on Circular Buffer), $s_0$, in the first slot in the TOT to an existing RV position (RV0 in FIG. 11) defined in Rel. 15/16.

Further, in FIG. 11, terminal 200 may configure a resource allocated for PUSCH in the first slot in the TOT to the reference resource, for example. The reference resource may be, for example, a resource amount that does not depend on the presence or absence of UCI multiplexing, as mentioned above. Terminal 200 may then, for example, determine each of RV positions $s_1$, $s_2$, and $s_3$ in n-th slots, based on the reference resource (e.g., the number of reference encoded bits, $N_{ref}$) and the slot index, n, (e.g., any of n = 1, 2, 3) in the TOT, in accordance with Equation 6.

Here, for example, the last bit position on the Circular Buffer of the read encoded bits in the first slot when no UCI multiplexing is present in the first slot, as in (a) of FIG. 11, and the last bit position on the Circular Buffer of the read encoded when the UCI multiplexing is present in the first slot, as in (b) of FIG. 11, may be different from each other.

With respect to this, as mentioned above, in FIG. 11, terminal 200 determines an RV position in a slot positioned after the first slot, based on the reference resource that is a resource allocated for PUSCH in the first slot in the TOT and that does not depend on the UCI multiplexing. Thus, as illustrated in (a) and (b) of FIG. 11, even when the last bit position (i.e., Rate-matching result) on the Circular Buffer of the read encoded bits in the first slot varies, terminal 200 uniquely determines RV positions, $s_1$, $s_2$, and $s_3$ in the slots after the first slot without depending on the presence or absence of UCI multiplexing.

Thus, terminal 200 can, for example, start processing of Rate matching in each slot without waiting for a processing result of the Rate matching in a preceding slot, which makes it possible to suppress an increase in processing latency in terminal 200.

For example, in the determination method of an RV position based on Equation 1, the last bit position, $l_{n-1}$, on a Circular Buffer of read encoded bits in a preceding slot may vary depending on the presence or absence of UCI multiplexing in a PUSCH resource. In contrast, in the determination method of an RV position based on Equation 6, the RV position in each slot is determined based on a reference resource that does not depend on the UCI multiplexing and without being affected by the presence or absence of UCI multiplexing. Thus, in the present embodiment, for example, the RV position in each slot does not depend on a DCI that assigns PDSCH corresponding to a UCI to be multiplexed. For this reason, terminal 200 is capable of performing PUSCH transmission that is robust against a misdetection of the DCI.

Besides, in the present embodiment, terminal 200 may determine, in accordance with PUSCH-dropping rules, whether or not to actually transmit PUSCH of each slot in an uplink slot available for TBoMS, for example.

Terminal 200 may count, as a slot composing a TOT, even a slot for which it has been determined that PUSCH is not actually transmitted (PUSCH transmission is dropped), for example. In other words, the slot index, n, in the TOT may be given to each of the slots composing the TOT, regardless of whether the PUSCH transmission is dropped.

For example, in the PUSCH-dropping rules, terminal 200 may determine to transmit no PUSCH (e.g., to drop PUSCH transmission) in a slot where the collision of the following cases occurs: a case where time resource allocation in a slot for PUSCH transmission collides with a downlink symbol configured by a dynamic SFI indication (dynamic SFI); a case where the time resource allocation in the slot for the PUSCH transmission collides with a resource indicated by UL CI; or a case where the time resource allocation in the slot for the PUSCH transmission collides with allocation of high-priority uplink transmission. In the present embodiment, for example, terminal 200 may count, as a slot composing a TOT, a slot in which PUSCH is not transmitted (slot in which PUSCH transmission is dropped).

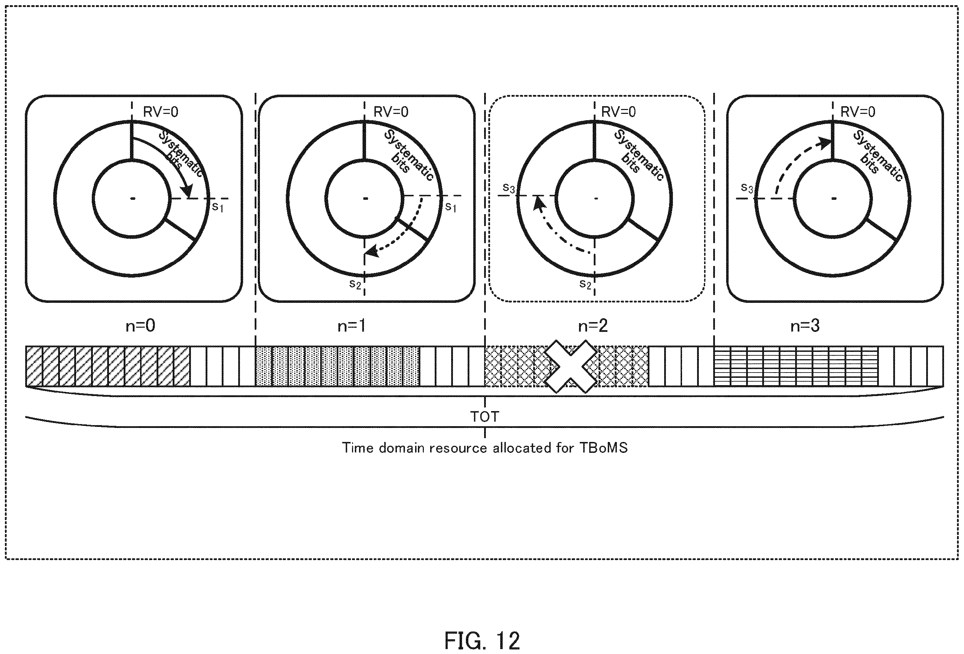

FIG. 12 illustrates another example of TBoMS using the Rate matching according to the present embodiment. In FIG. 12, as an example, the number of slots included in TBoMS is four, and the number of TOTs is one (e.g., four slots). As illustrated in FIG. 12, when determining to drop PUSCH transmission in the third slot in the TOT, for example, terminal 200 may configure the four slots in the TOT including the third slot with slot indices of n = 0 to 3. In other words, terminal 200 counts, as a slot composing the TOT, even the third slot where the PUSCH transmission is dropped.

Terminal 200 determines, by the methods mentioned above, the RV position (reading start bit position on Circular Buffer) in each of the first slot in the TOT and n-th slots composing the TOT (e.g., n is integer equal to or greater than one).

Note that terminal 200 may, for example, implement the processing of dropping PUSCH transmission by simply turning offRF on transmission after the encoding processing. For example, in the example of FIG. 12, terminal 200 may perform the RF off in slot where n = 2.

Meanwhile, in the similar manner as terminal 200, for example, base station 100 may determine the RV position in each slot in TBoMS of terminal 200, based on a reference resource (e.g., allocated resource for first slot in TOT) and then perform, based on the determined RV position, reception processing of a signal transmitted by TBoMS from terminal 200.

The exemplary operations of base station 100 and terminal 200 have been each described, thus far.

According to the present embodiment, base station 100 and terminal 200 determine an RV position in a certain slot of slots in a time-domain resource allocated for TBoMS, based on a reference resource that does not depend on a Rate-matching result in a slot before the certain slot, for example.

Therefore, according to the present embodiment, in TBoMS, a variable RV position can be applied to slot-by-slot Rate-matching processing, thus improving the decoding performance as in Option 2 mentioned above. Further, according to the present embodiment, in TBoMS, the slot-by-slot Rate-matching processing makes it possible to suppress an increase in processing latency in terminal 200.

Further, in the present embodiment, the RV position (reading start bit position on Circular Buffer) in each slot is not affected by the presence or absence of dynamical SFI indication (dynamic SFI), UL CI, or allocation of the high-priority uplink transmission. Thus, in the present embodiment, the RV position in each slot does not depend on the DCI corresponding to the dynamical SFI indication (dynamic SFI), the UL CI, or the allocation of the high-priority uplink transmission. Hence, the determination method of an RV position according to the present embodiment is robust against a mis-detection of the DCI.

Further, for example, since the RV positions are configured regardless of the presence or absence of erroneous detection of the DCI, inconsistency in RV positions is unlikely to arise base station 100 and terminal 200 when encoded bits are read from a Circular Buffer between. Thus, for example, base station 100 need not to perform the decoding processing taking into account the misdetection of the DCI in terminal 200. Hence, according to the present embodiment, it is possible to suppress complication of the decoding processing in base station 100.

In the manner described above, according to the present embodiment, the communication efficiency in uplink can be improved.

(Embodiment 2)

The configurations of the base station and the terminal according to the present embodiment may be the same as the configurations of base station 100 and terminal 200 according to Embodiment 1.

In the present embodiment, as in Embodiment 1, terminal 200 may determine, in accordance with PUSCH-dropping rules, whether or not to actually transmit PUSCH of each slot in an uplink slot available for TBoMS, for example.

Further, in the present embodiment, terminal 200 does not count, as a slot composing a TOT, a slot for which it has been determined that PUSCH is not transmitted (PUSCH transmission is dropped), for example. In other words, the slot index, n, in the TOT may be given to each slot that is of the slots composing the TOT and that is different from the slot in which the PUSCH transmission is dropped, e.g., each slot for performing the PUSCH transmission.

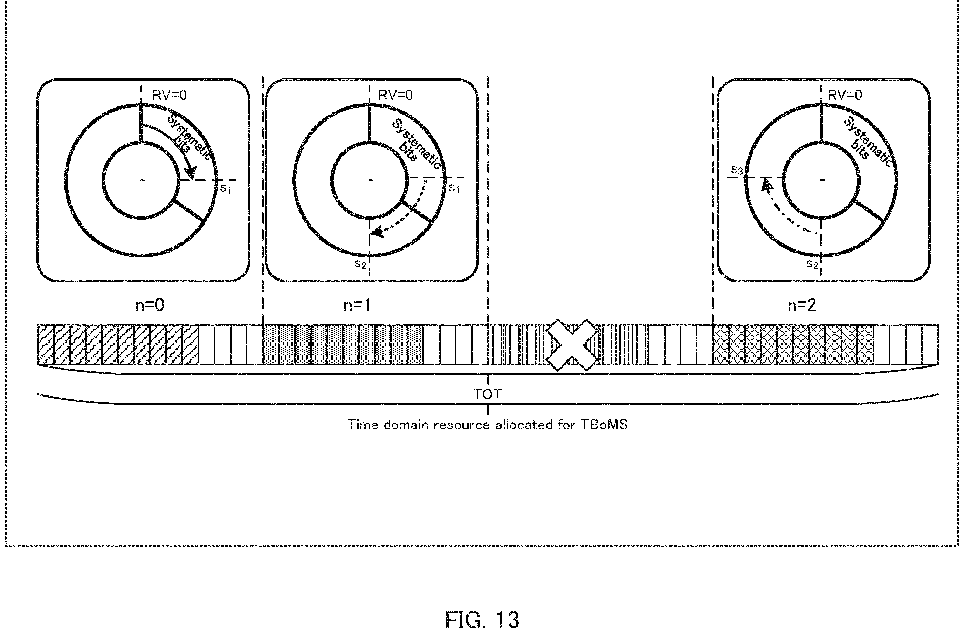

FIG. 13 illustrates an example of TBoMS using Rate matching according to the present embodiment. In FIG. 13, as an example, the number of slots included in TBoMS is four, and the number of TOTs is one (e.g., four slots). As illustrated in FIG. 13, when determining to drop PUSCH transmission in the third slot in the TOT, for example, terminal 200 may configure the three slots in the TOT that are different from the third slot with slot indices of $n = 0$ to 2. In other words, terminal 200 does not count, as a slot composing the TOT, the third slot where the PUSCH transmission is dropped.

Terminal 200 may, for example, determine the variable RV position (reading start bit position on Circular Buffer) in each slot for TBoMS, based on the number of reference encoded bits corresponding to the reference resource, $N_{ref}$, and the slot index, n, of each slot in the TOT. Note that, as mentioned above, the slot index, n, is an index of a slot that is of the slots in the TOT and that is for actually transmitting PUSCH excluding the slot where the PUSCH transmission is dropped.

Note that the reference resource may be, for example, a resource amount that does not depend on a Rate-matching result (reading result) of encoded data in a slot positioned before a slot in which the Rate matching is performed, as in Embodiment 1. For example, the reference resource may be a resource amount that does not depend on the presence or absence of UCI multiplexing. Alternatively, the reference resource may be a resource amount that does not depend on, for example, whether PUSCH transmission is dropped due to dynamic SFI indication (dynamic SFI), UL CI, or allocation of high-priority uplink transmission.

By way of example, the reference resource may be a resource amount (the number of REs) allocated for PUSCH transmission in the first slot in a TOT. For example, the number of reference encoded bits, $N_{ref}$, calculated based on the reference resource may be determined in accordance with Equation 5.

In the n-th slot in the TOT, for example, terminal 200 reads encoded bits of the number of bits corresponding to a resource amount to be allocated for PUSCH transmission in this slot from an RV position, $s_n$, that is given based on the number of reference encoded bits, $N_{ref}$, and a slot index, n, in the TOT and then maps the read encoded bits to a PUSCH resource in the n-th slot. In one example, an RV position, $s_n$, in the n-th PUSCH transmission (e.g., slot index, n) in the TOT may be given by the following Equation 7:

$$s_n = N_{RV_x} + n \cdot N_{ref} \qquad \dots \text{(Equation 7)}.$$

Here, $N_{RVx}$ is an RV position used in the first PUSCH transmission in the TOT (e.g., bit position specified by RV0, RV1, RV2, or RV3).

For example, in the example illustrated in FIG. 13, terminal 200 may, for example, configure an RV position (reading start bit position on Circular Buffer), $s_0$, in the first PUSCH transmission (e.g., slot where n = 0) in the TOT to an existing RV position (RV0 in FIG. 13) defined in Rel. 15/16.

Further, in FIG. 13, terminal 200 may configure a resource allocated for PUSCH in the first PUSCH transmission in the TOT to a reference resource, for example. The reference resource may be, for example, a resource amount that does not depend on the UCI multiplexing, as in Embodiment 1. Terminal 200 may then, for example, determine RV positions $s_1$ and $s_2$ in the n-th slots, based on the reference resource (e.g., the number of reference encoded bits, $N_{ref}$) and the slot index, n, (e.g., either of n = 1, 2) in the TOT, in accordance with Equation 7.

According to the present embodiment, as in Embodiment 1, in TBoMS, a variable RV position can be applied to slot-by-slot Rate-matching processing, thus improving the decoding performance as in Option 2 mentioned above and also suppressing an increase in processing latency in terminal 200. Additionally, in the present embodiment, the RV position (reading start bit position on Circular Buffer) in each slot is not affected by the presence or absence of dynamical SFI indication (dynamic SFI), UL CI, or allocation of the high-priority uplink transmission and does not depend on a DCI corresponding to these; thus, the determination method of an RV position is robust against a misdetection of the DCI, as in Embodiment 1. Further, for example, since the RV positions are configured regardless of the presence or absence of mis-detection of the DCI, inconsistency in RV positions is unlikely to arise between base station 100 and terminal 200 when encoded bits are read from a Circular Buffer; in addition, base station 100 need not perform the decoding processing taking into account the erroneous detection of the DCI in terminal 200, thereby suppressing complication of the decoding processing in base station 100.

Further, in the present embodiment, terminal 200 determines an RV position based on the number of reference encoded bits corresponding to a reference resource amount and a slot index of a slot that is of a plurality of slots in a TOT (or TBoMS) and that is different from a slot in which PUSCH transmission is dropped among the plurality of slot. This prevents deterioration of the decoding performance because even when PUSCH is not transmitted (PUSCH transmission is dropped) in at least one slot in the TOT, encoded bits stored in a Circular Buffer can be successively read in a plurality of slots in the TOT in which PUSCH is transmitted.

For example, FIG. 12 illustrates an example in which PUSCH transmission in the third slot is dropped in Embodiment 1, and FIG. 13 illustrates an example in which PUSCH transmission in the third slot is dropped in Embodiment 2. For example, in FIG. 12, since the PUSCH transmission in the third slot is dropped, terminal 200 transmits no encoded bits to be read from RV position, $s_2$. In contrast, for example, in FIG. 13, even when the PUSCH transmission in the third slot is dropped, terminal 200 transmits encoded bits to be read from RV position, $s_2$, in PUSCH transmission in the fourth slot. Thus, according to the present embodiment, since encoded bits stored in a Circular Buffer are evenly transmitted by TBoMS transmission, it is possible to prevent the deterioration of the decoding performance.

(Embodiment 3)

The configurations of the base station and the terminal according to the present embodiment may be the same as the configurations of base station 100 and terminal 200 according to Embodiment 1.

In order to use uplink resources efficiently in TBoMS, studies have been carried on a transmission method in which, even when at least one symbol of PUSCH resources (e.g., symbols) in a slot to be allocated is unavailable for PUSCH transmission, PUSCH can be transmitted in the slot as long as a certain number of symbols available for PUSCH transmission is included.

Here, a slot in which at least one symbol of PUSCH resources in the slot to be allocated is a symbol unavailable for PUSCH transmission while a certain number of symbols available for the PUSCH transmission is included is referred to as a "Special slot."

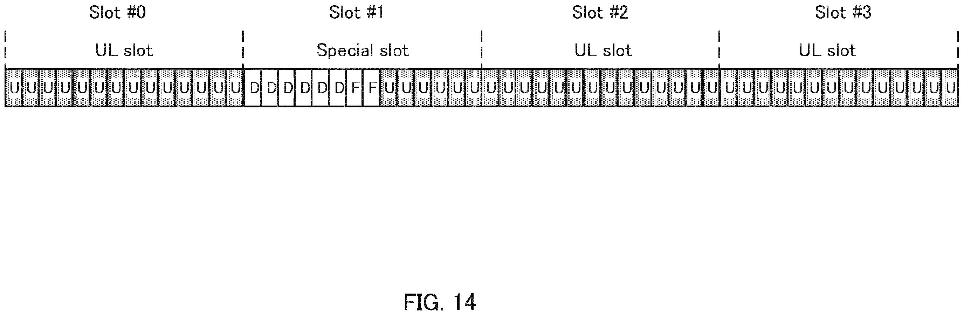

FIG. 14 illustrates an example of a case where PUSCH first-symbol position in a slot, S = 0, the number of symbols for transmitting PUSCH, L = 14, and the number of TBoMS slots = 4 are configured, and a Special slot (e.g., slot #1) is included in a portion of consecutive slots (e.g., slots #0, #1, #2, and #3). In FIG. 14, parts indicated by "U" represent PUSCH resources (symbols) with which PUSCH is actually transmitted. Further, in FIG. 14, parts indicated by "D" represent resources with which a downlink signal is transmitted, and parts indicated by "F" represent resources (e.g., flexible symbols) with which both the downlink signal and the uplink signal can be transmitted.

In the following, a slot that is not the Special slot is referred to as a "normal slot," for convenience. The normal slot may be, for example, a slot in which symbols included therein are available for PUSCH transmission, such as slots #0, #2, and #3 illustrated in FIG. 14.

For example, it is possible to improve the utilization efficiency of uplink resources and it is expected to improve the coverage performance of PUSCH, by terminal 200 transmitting PUSCH using an uplink symbol included in the Special slot.

In the present embodiment, for example, a method will be described in which a determination method (e.g., calculation method) of a reference resource is varied, depending on whether the first slot in a TOT is a Special slot.

In the following, three methods related to the calculation method of the reference resource will be described.

<Method 1>

In Method 1, the reference resource may be, for example, a value obtained by multiplying a resource amount (e.g., the number of REs) allocated for PUSCH transmission in the first slot in a TOT by a scaling factor that is greater than one (e.g., denoted as "K"). The resource, which is allocated for the PUSCH transmission in the first slot in the TOT and is used for calculating the reference resource, may be a resource that does not take UCI multiplexing into account.

Here, scaling factor, K, may vary depending on whether the first slot in the TOT is a Special slot. For example, when the first slot in the TOT is not a Special slot (normal slot), K = 1 may be configured. On the other hand, for example, when the first slot in the TOT is the Special slot, K > 1 may be configured.

For example, a reference resource amount, $N_{RE}$, may be calculated by the method expressed by the following Equation 8:

$$N_{RE} = K \cdot N_{RE,0} \qquad ... \text{(Equation 8)}.$$

Here, $N_{RE,0}$ indicates a resource amount (e.g., the number of REs) allocated for PUSCH transmission in the first slot in the TOT given by Equation 2 or Equation 3.

According to Method 1, even when the first slot in the TOT is the Special slot, it is made possible to configure a resource amount that is almost the same as that for the normal slot.

Note that, instead of the reference resource amount, $N_{RE,0}$, the number of encoded bits (the number of reference encoded bits), $N_{ref}$, calculated based on the reference resource may be multiplied by the scaling factor, K.

<Method2>

In Method. 1, for example, a slot based on which the reference resource amount is calculated is the first slot in a TOT regardless of whether the first slot in the TOT is the Special slot or not. In Method 2, for example, the slot based on which the reference resource amount is calculated may be the first normal slot in a TOT.

For example, when the first slot in the TOT is a normal slot, the slot based on which the reference resource amount is calculated may be the first slot. On the other hand, when the first slot in the TOT is a Special slot, the slot based on which the reference resource amount is calculated may be a normal slot (e.g., first normal slot) different from the first slot in the TOT.

According to Method 2, terminal 200 can calculate the reference resource amount with reference to a normal slot without depending on the configuration of a Special slot in a TOT. Therefore, according to Method 2, for example, as in Method 1, it is unnecessary to adjust a scaling factor depending on whether the first slot in a TOT is a Special slot, thus simplifying the processing of terminal 200.

<Method 3>

For example, in TBoMS, an example of an indication method of information on time-domain resource allocation may include a method of indicating, to terminal 200, a plurality of pieces of information on the first symbol position of PUSCH in a slot and the number of symbols for transmitting PUSCH (e.g., Start symbol and allocation Length Indicator Value (SLIV)).

The indication method of a plurality of SLIVs includes, for example, a method of individually indicating an SLIV for each slot in TBoMS or a method of indicating different SLIVs for a normal slot and for a Special slot.

Thus, in Method 3, when a plurality of SLIVs is indicated to terminal 200 via the information (e.g., also referred to as TDMA entry) on the time-domain resource allocation, a slot based on which the reference resource amount is calculated may be configured to the slot to which a value of the largest symbol length (L) among the plurality of SLIVs has been indicated.

For example, in Method 3, when different SLIVs for a normal slot and for a Special slot are indicated, terminal 200 may configure, as the reference resource, a reference resource for the slot for which the SLIV corresponding to the normal slot is indicated.

The three methods related to the calculation method of a reference resource have been each described, thus far.

Besides, in the present embodiment, terminal 200 may determine an RV position (reading start bit position on Circular Buffer) in the n-th slot in a TOT, based on Equation 6 as in Embodiment 1 or Equation 7 as in Embodiment 2.

According to the present embodiment, even when a normal slot and a Special slot coexist in a TOT, parameters used for determination of the RV position in each slot are two parameters of the number of reference encoded bits corresponding to the reference resource and the slot index, which is advantageous in simplifying the processing of terminal 200.

Incidentally, in the present embodiment, configuration for the slot index, n, may be the same as that in Embodiment 1 or Embodiment 2.

(Embodiment 4)

The configurations of the base station and the terminal according to the present embodiment may be the same as the configurations of base station 100 and terminal 200 according to Embodiment 1.

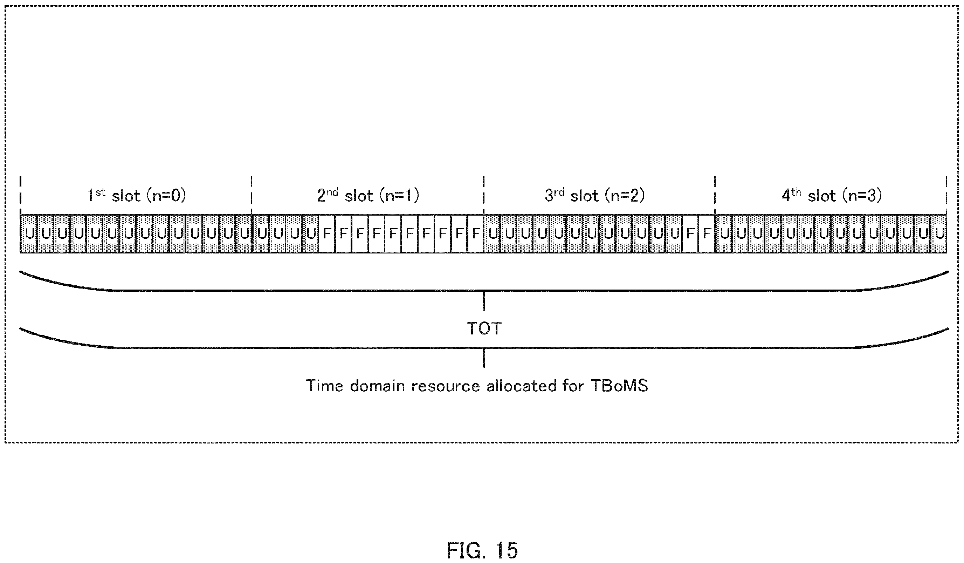

For example, in TBoMS, in order to improve the utilization efficiency of uplink resources, it may be allowed that PUSCH resources in slots allocated for TBoMS are different from one another between the slots in a TOT, as illustrated in FIG. 15.

In the present embodiment, terminal 200 may, for example, calculate a reference resource based on a the number of PUSCH symbols serving as a reference (e.g., denoted by "$L_{ref}$"). The number of PUSCH symbols serving as the reference (reference value of the number of symbols), $L_{ref}$, may be, for example, the number of symbols composing a slot ($L_{ref}$ = 14) or other values.

Further, for example, terminal 200 may determine the variable RV position (reading start bit position on Circular Buffer) in each slot for TBoMS, based on the number of reference encoded bits corresponding to the reference resource, $N_{ref}$, slot index, n, in a TOT and a ratio (e.g., denoted by "$\gamma$") between the number of symbols that is used for an actual PUSCH transmission in each slot and the number of PUSCH symbols serving as a reference.

Incidentally, in the present embodiment, configuration for the slot index, n, may be the same as that in Embodiment 1 or Embodiment 2.

Note that the reference resource may be a resource amount that does not depend on a Rate-matching result (reading result) of encoded data in a slot positioned before a slot in which the Rate matching is performed. For example, the reference resource may be a resource amount that does not depend on the presence or absence of UCI multiplexing. Alternatively, the reference resource may be a resource amount that does not depend on, for example, whether PUSCH transmission is dropped due to dynamic SFI indication (dynamic SFI), UL CI, or allocation of high-priority uplink transmission.

For example, the reference resource may be a resource amount (e.g., the number of REs) allocated for PUSCH transmissions of the number of PUSCH symbols serving as a reference (e.g., $L_{ref}$ = 14). As an example, the reference resource amount, $N_{RE}$, may be calculated based on the following Equation 9 or Equation 10:

$$N_{RE} = \min\left(156, N'_{RE}\right) n_{PRB} \qquad \dots \text{(Equation 9)};$$

and

$$N_{RE} = N'_{RE} \cdot n_{PRB} \qquad \dots \text{(Equation 10)}.$$

In Equation 9, the upper limit of the number of REs in a slot is set to 156, for example. Note that the upper limit value of the number of REs in the slot is not limited to 156 and may be other values.

In Equation 9 and Equation 10, $n_{PRB}$ is the number of resource blocks (e.g., the number of PRBs) allocated for TBoMS transmission. Further, in Equation 9 and Equation 10, $N'_{RE}$ may be calculated based on, for example, the following Equation 11:

$$N'_{RE} = N^{RB}_{sc} L_{ref} - N^{PRB}_{DMRS} - N^{PRB}_{oh} \qquad \dots \text{(Equation 11)}.$$

The following are used, herein:

$N_{sc}^{RB}$ : Number of subcarriers per resource block (e.g., 12);

$L\_ref$ : Number of PUSCH symbols serving as reference (e.g., 14);

$N_{DMRS}^{RPB}$ : Number of DMRS REs allocated for PUSCH transmission in first slot in TOT; and

$N_{oh}^{PRB}$ : Overhead factor indicated to terminal 200 by RRC.

Further, the number of reference encoded bits corresponding to the reference resource, $N_{ref}$, may be calculated, for example, by using the reference resource amount, $N_{RE}$, calculated by Equation 9 or Equation 10, based on the following Equation 12:

$$N_{ref} = N_{RE} \cdot Q_m \cdot v \qquad \dots \text{(Equation 12)}.$$

The following are used, herein:

$Q_m$: Modulation order; and
u: Number of MIMO layers.

Further, the ratio, $\gamma$, between the number of symbols that is used for an actual PUSCH transmission in each slot and the number of PUSCH symbols serving as a reference may be given as a ratio, $L_n/L_{ref}$, between the actual number of PUSCH symbols in the n-th slot, $L_n$, and the number of PUSCH symbols serving as a reference, $L_{REF}$. For example, in the example illustrated in FIG. 15, in a case where $L_{REF} = 14$, $\gamma_0 = L_0/L_{ref} = 14/14 = 1$, $\gamma_1 = L_1/L_{ref} = 4/14 = 2/7$, and $\gamma_2 = L_2/L_{ref} = 12/14 = 6/7$ may be configured.

In the n-th slot in the TOT, for example, terminal 200 reads encoded bits corresponding to a resource amount to be allocated for PUSCH transmission in this slot from an RV position, $s_n$, that is given based on the number of reference encoded bits corresponding to the reference resource, $N_{ref}$, and the slot index, n, in the TOT, and the ratio, $\gamma$, and then maps the read encoded bits to a PUSCH resource in the n-th slot.

For example, the RV position, $s_n$, in the n-th slot composing the TOT may be given by the following Equation 13:

$$s_n = N_{RV_x} + \sum_{i=0}^{n-1} N_{ref} \cdot \gamma_i \qquad \dots \text{(Equation 13)}.$$

Here, $N_{RV_x}$ is the RV position used in the first slot in the TOT (e.g., bit position specified by RV0, RV1, RV2, or RV3).

According to the present embodiment, terminal 200 determines the RV position in each of the plurality of slots in the TOT based on the ratio, $\gamma$, between the number of symbols used for PUSCH transmission in each slot and the number of PUSCH symbols serving as a reference. Using the ratio, $\gamma$, enables adjustment of the number of reference encoded bits corresponding to the reference resource, $N_{ref}$, in accordance with the resource amount allocated for the PUSCH transmission in each slot (i.e., ratio between the number of PUSCH symbols serving as reference and the number of PUSCH symbols of each slot), so that the accuracy of Rate matching in each slot can be improved and the decoding performance can be thus improved.

(Embodiment 5)

The configurations of the base station and the terminal according to the present embodiment may be the same as the configurations of base station 100 and terminal 200 according to Embodiment 1.

In the present embodiment, as in Embodiment 4, a case where PUSCH resources in slots allocated for TBoMS are different from one another between the slots in a TOT will be described, as illustrated in FIG. 15.

For example, in Embodiments 1 to 4, the methods have been each described in which a reference resource is configured for a plurality of slots in a TOT, and then, based on the reference resource, the RV position in each of the plurality of slots in the TOT is determined.

In the present embodiment, for example, a description will be given of a method of configuring a reference resource for each of a plurality of slots in a TOT and then determining the RV position in each slot based on the reference resource for each of the plurality of slots in the TOT.

For example, terminal 200 may determine a variable RV position (reading start bit position on Circular Buffer) in the n-th slot for TBoMS, based on the number of reference encoded bits calculated based on the reference resource for this slot (e.g., denoted by "$N_{RE,n}$") and the slot index, n, in the TOT.

Incidentally, in the present embodiment, configuration for the slot index, n, may be the same as that in Embodiment 1 or Embodiment 2.

For example, the reference resource for the n-th slot in the TOT may be a resource amount (e.g., the number of REs) allocated for PUSCH transmission that does not take into account the UCI multiplexing in the n-th slot. As an example, the reference resource amount for the n-th slot in the TOT, $N_{RE,n}$, may be calculated based on the following Equation 14 or Equation 15:

$$N_{RE,n} = \min\left(156,\ N'_{RE,n}\right) n_{PRB} \qquad \text{... (Equation 14);}$$

and

$$N_{RE,n} = N'_{RE,n} \cdot n_{PRB} \qquad \text{... (Equation 15).}$$

In Equation 14, the upper limit of the number of REs in a slot is set to 156, for example. Note that the upper limit value of the number of REs in the slot is not limited to 156 and may be other values.

In Equation 14 and Equation 15, $n_{PRB}$ is the number of resource blocks (e.g., the number of PRBs) allocated for TBoMS transmission. Further, in Equation 14 and Equation 15, $N'_{RE}$ may be calculated based on, for example, the following Equation 16:

$$N'_{RE,\ n} = N_{sc}^{RB} N_{symbol,\ n}^{sh} - N_{DMRS}^{PRB} - N_{oh}^{PRB} \qquad \text{... (Equation 16).}$$

The following are used, herein:

$N_{sc}^{RB}$ : Number of subcarriers per resource block (e.g., 12);

$N_{symbol,\ n}^{sh}$ : Number of OFDM symbols allocated for PUSCH transmission in n-th slot in TOT;

$N_{DMRS}^{RPB}$ : Number of DMRS REs allocated for PUSCH transmission in n-th slot in TOT; and

$N_{oh}^{PRB}$ : Overhead factor indicated to terminal 200 by RRC.

Further, in the n-th slot in the TOT, the number of reference encoded bits corresponding to the reference resource, $N_{ref}(n)$, may be calculated, for example, by using the reference resource amount, $N_{RE,n}$, calculated by Equation 14 or Equation 15, based on the following Equation 17:

$$N_{ref}(n) = N_{RE,\ n} \cdot Q_m \cdot v \qquad \text{... (Equation 17).}$$

The following are used, herein:

$Q_m$: Modulation order; and
u: Number of MIMO layers.

In the n-th slot in the TOT, for example, terminal 200 reads encoded bits corresponding to a resource amount to be allocated for PUSCH transmission in this slot from an RV position, $s_n$, that is given based on the number of reference encoded bits corresponding to the reference resource for the n-th slot, $N_{ref}(n)$, and the slot index, n, in the TOT, and then maps the read encoded bits to a PUSCH resource in the n-th slot.

For example, the RV position, $s_n$, in the n-th slot composing the TOT may be given by the following Equation 18:

$$s_n = N_{RV_x} + \sum_{i=0}^{n-1} N_{ref}(i) \qquad \text{... (Equation 18)}.$$

Here, $N_{RVx}$ is the RV position used in the first slot in the TOT (e.g., bit position specified by RV0, RV1, RV2, or RV3).

According to the present embodiment, terminal 200 configures a reference resource for each of a plurality of slots in a TOT. The individual configuration of the reference resource allows terminal 200 to map encoded bits to a resource in the slot, in accordance with the resource amount allocated for the PUSCH transmission in each slot (i.e., resource amount allocated for PUSCH transmission in each slot), so that the accuracy of Rate matching in each slot can be improved and the decoding performance can be thus improved.

In the present embodiment, since the reference resource is configured individually for each slot, for example, it is possible to vary a reference resource (or the number of reference encoded bits) between slots depending on a difference in DMRS configuration between the slots; thus, the accuracy of Rate matching can be further improved as compared with Embodiment 4 (method using ratio between the number of PUSCH symbols serving as reference and the actual number of PUSCH symbols in each slot).

Further, according to the present embodiment, for example, parameters used for determination of the RV position in each slot are two parameters of the number of reference encoded bits corresponding to the reference resource for each slot, which does not depend on the UCI multiplexing, and the slot index, so that it is advantageous in simplifying the processing of terminal 200.

(Embodiment 6)

The configurations of the base station and the terminal according to the present embodiment may be the same as the configurations of base station 100 and terminal 200 according to Embodiment 1.

As described above, a time-domain resource allocated for TBoMS can be configured by a plurality of TOTs. In the present embodiment, when the time-domain resource allocated for TBoMS can be configured by the plurality of TOTs, the RV position in the first slot in each TOT (reading start bit position on Circular Buffer) may be determined by any of the following methods.

<Method 1>

In Method 1, the RV position in the first slot in a TOT (reading start bit position on Circular Buffer) may be a specified RV position (e.g., reading start bit position on Circular Buffer specified by RV0, RV1, RV2, or RV3).

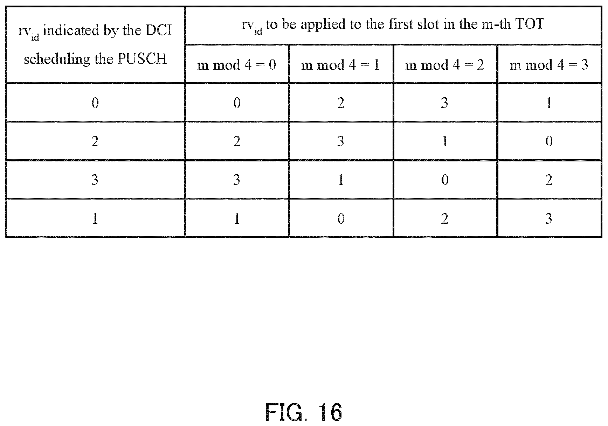

By way of example, terminal 200 may determine an RV position to be applied to PUSCH transmitted in the first slot in each TOT for TBoMS, based on, for example, an RV field included in a DCI. In one example, when TBoMS transmission is scheduled by a DCI format that includes a two-bit RV field, an RV to be applied to the first slot in the m-th TOT may be configured, as illustrated in FIG. 16.

For example, in FIG. 16, when the two-bit RV field indicates "2," terminal 200 may configure RV positions in the first slots with RV2, RV3, RV1, and RV0 in this order starting from the first TOT in TBoMS. RVs may be configured in the same manner for other values in the RV field illustrated in FIG. 16. Note that the RV positions applied to the first slots in the plurality of TOTs, respectively, are not limited to the examples illustrated in FIG. 16.

According to Method 1, since an RV position in the first slot in each of the plurality of TOTs in TBoMS is configured to a specified RV position, the processing of terminal 200 can be simplified. Further, for example, as illustrated in FIG. 16, since RV positions in the first slots, respectively, in the plurality of TOTs are evenly configured to the specified RV positions in a Circular buffer, it is made easier to transmit all encoded bits stored in the Circular buffer, thereby improving the decoding performance.

<Method 2>

In Method 2, an RV position in the first slot in each TOT (reading start bit position on Circular Buffer) may be configured to be variable. For example, the RV position in the first slot in each TOT may be determined based on a reference resource (e.g., the number of reference encoded bits).

For example, the RV position, $s_{m,0}$, in the first slot (e.g., n = 0) in the m-th TOT may be given by the following Equation 19:

$$s_{m,0} = N_{RV_x} + m \cdot N_{slot}^{TOT} \cdot N_{ref} \qquad \dots \text{(Equation 19)}.$$

The following are used, herein:

$N_{RV_x}$: RV position (e.g., bit position specified by RV0, RV1, RV2, or RV3) used in first slot in first TOT;

$N_{slot}^{TOT}$ : Number of slots included in TOT; and

$N_{ref}$: Number of reference encoded bits.

Note that Equation 19 is an example of a case where the number of slots included in each TOT is the same.

When the number of slots included in each TOT is individually configured (e.g., when the number of slots may vary), the RV position, $s_{m,0}$, in the first slot in the m-th TOT may be given by the following Equation 20:

$$s_{m,0} = N_{RV_x} + \sum_{i=0}^{m-1} N_{slot}^{TOT}(i) \cdot N_{ref} \qquad \dots \text{(Equation 20)}.$$

Herein, $N_{slot}^{TOT}(m)$ is the number of slots included in the m-th TOT.

According to Method 2, an RV position in the first slot in each of a plurality of TOTs in TBoMS can be configured to be variable in accordance with the resource amount (e.g., reference resource) in each TOT, so that encoded bits stored in a Circular buffer can be successively read, thus improving the decoding performance.

The embodiments according to an exemplary embodiment of the present disclosure have been each described, thus far.

(Variation 1)

In TBoMS, a TBS may be calculated by the following methods, for example.

The TBS may be determined by multiplying a TBS calculated from a resource amount allocated for PUSCH transmission in the first slot in a TOT by a scaling factor that is greater than one. For example, the number of resource amount (the number of REs), $N_{RE}$, allocated for PUSCH transmission in the first slot may be calculated based on the following Equation 21:

$$N_{RE} = \min(156, \ N_{RE}') \, n_{PRB} \qquad \dots \text{(Equation 21)}.$$

In Equation 21, the upper limit of the number of REs in a slot is set to 156, for example. Note that the upper limit value of the number of REs in the slot is not limited to 156 and may be other values.

In Equation 21, $n_{PRB}$ is the number of resource blocks (e.g., the number of PRBs) allocated for PUSCH transmission. Further, in Equation 21, $N_{RE}'$ may be calculated based on, for example, the following Equation 22:

$$N_{RE}' = N_{sc}^{RB} N_{symbol}^{sh} - N_{DMRS}^{PRB} - N_{oh}^{PRB} \qquad \dots \text{(Equation 22)}.$$

The following are used, herein:

$N_{sc}^{RB}$ : Number of subcarriers per resource block (e.g., 12);

$N_{symbol}^{sh}$ : Number of OFDM symbols allocated for PUSCH transmission in first slot;

$N_{DMRS}^{RPB}$ : Number of DMRS REs allocated for PUSCH transmission in first slot; and

$N_{oh}^{PRB}$ : Overhead factor indicated to terminal 200 by RRC.

For example, the number of OFDM symbols allocated for the PUSCH transmission in the first slot may be indicated to terminal 200 by information on a symbol length of time-domain resource allocation (TDRA).

TB size, $N_{info}$, may be calculated, by using the resource amount, $N_{RE}$, allocated for the PUSCH transmission in the first slot calculated by Equation 21, for example, based on the following Equation 23:

$$N_{info} = N_{RE} \cdot R \cdot Q_m \cdot v \cdot K \qquad \text{... (Equation 23).}$$

The following are used, herein:

$R$: Coding rate;
$Q_m$: Modulation order;
u: Number of MIMO layers; and
$K$: Scaling factor greater than one.

In calculation of the number of reference encoded bits ($N_{ref}$) corresponding to the reference resource amount used in determining the RV position in each slot in a TOT, terminal 200 may use a value that has been used for calculation of the TBS in PUSCH transmission, for example. In one example, for calculation of the reference resource amount (e.g., the number of reference encoded bits) in the above-described embodiments, at least one of $N_{RE}$ of Equation 21 and $N'_{RE}$ of Equation 22 in the TBS calculation may be repurposed.

Repurposing the value used for the calculation of the TBS to the calculation of the reference resource can reduce the processing amount or the memory usage in terminal 200.

The variation has been described, thus far.

In a non-limiting example of the present disclosure, a reference resource may be configured based on a resource of any slot in a TOT, without limitation to the case of configuration based on the resource of the first slot in the TOT or the first normal slot in the TOT.

Further, in a non-limiting example of the present disclosure, a description has been given of the processing in Option 2 with the variable RV position applied (slot-by-slot Rate matching), but the present disclosure is not limited to this. For example, the processing in Option 3 with the variable RV position applied (TOT-by-TOT Rate matching) may be performed. In this case, for example, the slot-by-slot processing and the individual or common parameters for slots in the above-described embodiments may be respectively replaced with TOT-by-TOT processing and individual or common parameters for TOTs.

Further, in a non-limiting example of the present disclosure, a TOT may be a unit for one TBoMS transmission (Single TBoMS). Further, a repeated transmission (Repetition) of TBoMS to transmit a plurality of TBoMS transmission units may be applied. In this case, for example, a TOT in the above-described embodiments may be replaced with a unit for one TBoMS transmission (Single TBoMS).

Further, in a non-limiting example of the present disclosure, the number of reference encoded bits may be the number of bits excluding a Filler bit of an LDPC code. For example, in Equation 18 mentioned above, when the i-th slot composing a TOT includes a Filler bit, the RV position, $s_n$, in the n-th slot composing the TOT may be given by the following Equation 24:

$$s_n = N_{RV_x} + \sum_{i=0}^{n-1} \left( N_{ref}(i) + \tau(i) \right) \qquad \text{... (Equation 24).}$$

Herein, $\tau(i)$ is the number of Filler bits in the i-th slot.

Further, in a non-limiting example of the present disclosure, the RV position calculation may be given by Modulo computation with a Circular Buffer size or Circular Buffer length, $N_{cb}$, as a modulus. For example, in Equation 18 mentioned above, the RV position, $s_n$, in the n-th slot composing the TOT may be given by the following Equation 25:

$$s_n = \left( N_{RV_x} + \sum_{i=0}^{n-1} N_{ref}(i) \right) \bmod N_{cb} \qquad \text{... (Equation 25).}$$

Further, in a non-limiting example of the present disclosure, a PUSCH resource available for PUSCH transmission may include not only an uplink symbol (U) but also a flexible symbol (F).

Further, in a non-limiting example of the present disclosure, TBoMS transmission has been described as an example of PUSCH transmission using multiple slots, but the PUSCH transmission using the multiple slots is not limited to the TBoMS transmission and may be other transmission methods. Moreover, transmission using multiple slots is not limited to the transmission of PUSCH and may be transmission of other channels or signals.

For example, the communication apparatus that performs transmission of data is not limited to terminal 200 and may be base station 100. Similarly, the communication apparatus that performs reception of data is not limited to base station 100 and may be terminal 200. In other words, the embodiments or variation may be applied to either one or both of downlink transmission and sidelink transmission, without limitation to uplink transmission.

The embodiments, variation, and methods in the embodiments in a non-limiting example of the present disclosure may be switchable or may be made different per communication method (type) or type of channel/signal.

Further, the names of the information elements used in a non-limiting example of the present disclosure or the names of the parameters configured for the information elements are exemplary, and other names may be possible. In addition, the parameter values described in the embodiments or variation, such as the number of slots configuring TBoMS, the number of slots configuring a TOT, the number of TOTs included in TBoMS, the number of symbols in a slot, configuration of a slot type in a TOT (e.g., "D," "U," or "F"), and a specified number of RV positions are exemplary, and other values may be possible.

In the description of the above-described embodiments, the term such as "part" or "portion" or the term ending with a suffix such as "-er" "-or" or "-ar" may be interchangeably replaced with another term, such as "circuit (circuitry)," "device," "unit," or "module."

(Complements)

Information indicating whether terminal 200 supports the functions, operations, or processes that have been described in the above-mentioned embodiments and variations may be transmitted (or indicated) from terminal 200 to base station 100, as capability information or a capability parameter for terminal 200, for example.

The capacity information may include information elements (IEs) that individually indicate whether terminal 200 supports at least one of the functions, operations, or processes that have been described in the above-mentioned embodiments and variations. Alternatively, the capability information may include information elements that indicate whether terminal 200 supports a combination of any two or more of the functions, operations, or processes that have been described in the above-mentioned embodiments and variations.

Base station 100 may determine (or decide or assume), for example, based on the capability information received from terminal 200, the functions, operations, or processes that are supported (or not supported) by terminal 200, which is a transmission source of the capability information. Base station 100 may execute operations, processes, or control in accordance with a determination result based on the capability information. By way of example, base station 100 may control TBoMS transmission, based on the capability information received from terminal 200.

Note that, in a case where terminal 200 does not entirely support the functions, operations, or processes described in the above-mentioned embodiments and variations, such an unsupported part of the functions, operations, or processes may be interpreted as a limitation in terminal 200. For example, information or a request relating to such limitation may be indicated to base station 100.

The information on the capability or the limitation of terminal 200 may be defined by standards or may be implicitly indicated to base station 100 in association with information known in base station 100 or information to be transmitted to base station 100, for example.

(Control Signals)

In the present disclosure, the downlink control signal (information) related to the present disclosure may be a signal (information) transmitted through PDCCH of the physical layer or may be a signal (information) transmitted through a MAC Control Element (CE) of the higher layer or the RRC. The downlink control signal may be a pre-defined signal (information).

The uplink control signal (information) related to the present disclosure may be a signal (information) transmitted through PUCCH of the physical layer or may be a signal (information) transmitted through a MAC CE of the higher layer or the RRC. Further, the uplink control signal may be a pre-defined signal (information). The uplink control signal may be replaced with uplink control information (UCI), the 1st stage sidelink control information (SCI) or the 2nd stage SCI.

(Base Station)

In the present disclosure, the base station may be a Transmission Reception Point (TRP), a clusterhead, an access point, a Remote Radio Head (RRH), an eNodeB (eNB), a gNodeB (gNB), a Base Station (BS), a Base Transceiver Station (BTS), a base unit or a gateway, for example. Further, in side link communication, a terminal may serve as a base station. The base station may be a relay apparatus that relays communication between a higher node and a terminal. The base station may be a roadside unit as well.

(Uplink/Downlink/Sidelink)

The present disclosure may be applied to any of uplink, downlink and sidelink. The present disclosure may be applied to, for example, uplink channels, such as PUSCH, PUCCH, and PRACH, downlink channels, such as PDSCH, PDCCH, and PBCH, and side link channels, such as Physical Sidelink Shared Channel (PSSCH), Physical Sidelink Control Channel (PSCCH), and Physical Sidelink Broadcast Channel (PSBCH).

PDCCH, PDSCH, PUSCH, and PUCCH are examples of a downlink control channel, a downlink data channel, an uplink data channel, and an uplink control channel, respectively. PSCCH and PSSCH are examples of a sidelink control channel and a sidelink data channel, respectively. PBCH and PSBCH are examples of broadcast channels, respectively, and PRACH is an example of a random access channel.

(Data Channels/Control Channels)

The present disclosure may be applied to any of data channels and control channels. The channels in the present disclosure may be replaced with data channels including PDSCH, PUSCH and PSSCH and/or control channels including PDCCH, PUCCH, PBCH, PSCCH, and PSBCH.

(Reference Signals)

In the present disclosure, the reference signals are signals known to both a base station and a mobile station and each reference signal may be referred to as a Reference Signal (RS) or sometimes a pilot signal. The reference signal may be any of a DMRS, a Channel State Information - Reference Signal (CSI-RS), a Tracking Reference Signal (TRS), a Phase Tracking Reference Signal (PTRS), a Cell-specific Reference Signal (CRS), and a Sounding Reference Signal (SRS).

(Time Intervals)

In the present disclosure, time resource units are not limited to one or a combination of slots and symbols, and may be time resource units, such as frames, superframes, subframes, slots, time slots, subslots, minislots, or time resource units, such as symbols, Orthogonal Frequency Division Multiplexing (OFDM) symbols, Single Carrier-Frequency Division Multiple Access (SC-FDMA) symbols, or other time resource units. The number of symbols included in one slot is not limited to any number of symbols exemplified in the embodiment(s) described above, and may be other numbers of symbols.

(Frequency Bands)

The present disclosure may be applied to any of a licensed band and an unlicensed band.

(Communication)

The present disclosure may be applied to any of communication between a base station and a terminal (Uu-link communication), communication between a terminal and a terminal (Sidelink communication), and Vehicle to Everything (V2X) communication. The channels in the present disclosure may be replaced with PSCCH, PSSCH, Physical Sidelink Feedback Channel (PSFCH), PSBCH, PDCCH, PUCCH, PDSCH, PUSCH, and PBCH.

In addition, the present disclosure may be applied to any of a terrestrial network or a network other than a terrestrial network (NTN: Non-Terrestrial Network) using a satellite or a High Altitude Pseudo Satellite (HAPS). In addition, the present disclosure may be applied to a network having a large cell size, and a terrestrial network with a large latency compared with a symbol length or a slot length, such as an ultra-wideband transmission network.

(Antenna Ports)

An antenna port refers to a logical antenna (antenna group) formed of one or more physical antenna(s). That is, the antenna port does not necessarily refer to one physical antenna and sometimes refers to an array antenna formed of multiple antennas or the like. For example, it is not defined how many physical antennas form the antenna port, and instead, the antenna port is defined as the minimum unit through which a terminal is allowed to transmit a reference signal. The antenna port may also be defined as the minimum unit for multiplication of a precoding vector weighting.

<5G NR System Architecture and Protocol Stack>

3GPP has been working on the next release for the 5th generation cellular technology (simply called "5G"), including the development of a new radio access technology (NR) operating in frequencies ranging up to 100 GHz. The first version of the 5G standard was completed at the end of 2017, which allows proceeding to 5G NR standard-compliant trials and commercial deployments of terminals (e.g., smartphones).

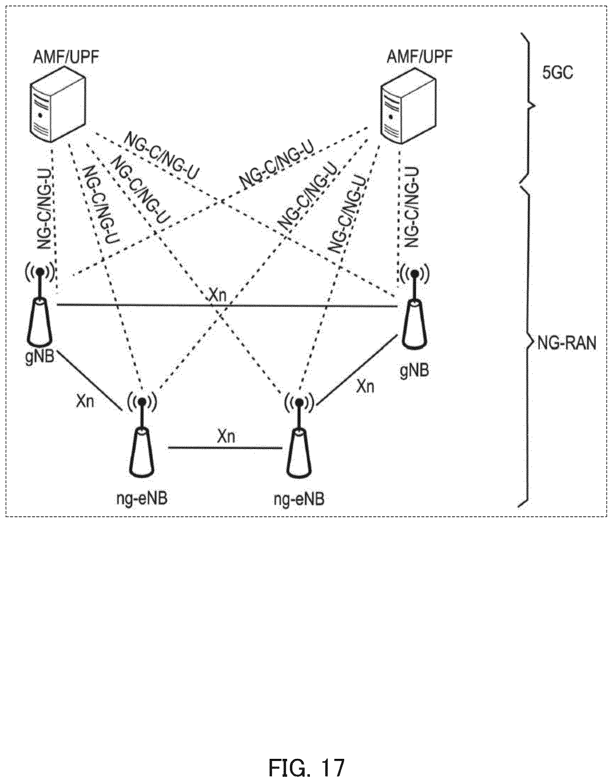

For example, the overall system architecture assumes an NG-RAN (Next Generation-Radio Access Network) that includes gNBs, providing the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g., a particular core entity performing the AMF) by means of the NG-C interface and to the UPF (User Plane Function) (e.g., a particular core entity performing the UPF) by means of the NG-U interface. The NG-RAN architecture is illustrated in FIG. 17 (see e.g., 3GPP TS 38.300 v15.6.0, section 4).

The user plane protocol stack for NR (see e.g., 3GPP TS 38.300, section 4.4.1) includes the PDCP (Packet Data Convergence Protocol, see clause 6.4 of TS 38.300), RLC (Radio Link Control, see clause 6.3 of TS 38.300) and MAC (Medium Access Control, see clause 6.2 of TS 38.300) sublayers, which are terminated in the gNB on the network side. Additionally, a new Access Stratum (AS) sublayer (SDAP, Service Data Adaptation Protocol) is introduced above the PDCP (see e.g., clause 6.5 of 3GPP TS 38.300). A control plane protocol stack is also defined for NR (see for instance TS 38.300, section 4.4.2). An overview of the Layer 2 functions is given in clause 6 of TS 38.300. The functions of the PDCP, RLC, and MAC sublayers are listed respectively in clauses 6.4, 6.3, and 6.2 of TS 38.300. The functions of the RRC layer are listed in clause 7 of TS 38.300.

For instance, the Medium Access Control layer handles logical-channel multiplexing, and scheduling and scheduling-related functions, including handling of different numerologies.

The physical layer (PHY) is for example responsible for coding, PHY HARQ processing, modulation, multi-antenna processing, and mapping of the signal to the appropriate physical time-frequency resources. The physical layer also handles mapping of transport channels to physical channels. The physical layer provides services to the MAC layer in the form of transport channels. A physical channel corresponds to the set of time-frequency resources used for transmission of a particular transport channel, and each transport channel is mapped to a corresponding physical channel. Examples of the physical channel include a Physical Random Access Channel (PRACH), a Physical Uplink Shared Channel (PUSCH), and a Physical Uplink Control Channel (PUCCH) as uplink physical channels, and a Physical Downlink Shared Channel (PDSCH), a Physical Downlink Control Channel (PDCCH), and a Physical Broadcast Channel (PBCH) as downlink physical channels.

Use cases/deployment scenarios for NR could include enhanced mobile broadband (eMBB), ultra-reliable low-latency communications (URLLC), and massive machine type communication (mMTC), which have diverse requirements in terms of data rates, latency, and coverage. For example, eMBB is expected to support peak data rates (20 Gbps for downlink and 10 Gbps for uplink) and user-experienced data rates on the order of three times what is offered by IMT-Advanced. On the other hand, in case of URLLC, the tighter requirements are put on ultra-low latency (0.5 ms for UL and DL each for user plane latency) and high reliability (1-10-5 within 1 ms). Finally, mMTC may preferably require high connection density (1,000,000 devices/km$^2$ in an urban environment), large coverage in harsh environments, and extremely long-life battery for low cost devices (15 years).

Therefore, the OFDM numerology (e.g., subcarrier spacing, OFDM symbol duration, cyclic prefix (CP) duration, and number of symbols per scheduling interval) that is suitable for one use case might not work well for another. For example, low-latency services may preferably require a shorter symbol duration (and thus larger subcarrier spacing) and/or fewer symbols per scheduling interval (aka, TTI) than an mMTC service. Furthermore, deployment scenarios with large channel delay spreads may preferably require a longer CP duration than scenarios with short delay spreads. The subcarrier spacing should be optimized accordingly to retain the similar CP overhead. NR may support more than one value of subcarrier spacing. Correspondingly, subcarrier spacings of 15 kHz, 30 kHz, and 60 kHz... are being considered at the moment. The symbol duration Tu and the subcarrier spacing $\Delta f$ are directly related through the formula $\Delta f = 1/Tu$. In a similar manner as in LTE systems, the term "resource element" can be used to denote a minimum resource unit being composed of one subcarrier for the length of one OFDM/SC-FDMA symbol.

In the new radio system 5G-NR for each numerology and each carrier, resource grids of subcarriers and OFDM symbols are defined respectively for uplink and downlink. Each element in the resource grids is called a resource element and is identified based on the frequency index in the frequency domain and the symbol position in the time domain (see 3GPP TS 38.211 v15.6.0).

<Functional Split between NG-RAN and 5GC in 5G NR>

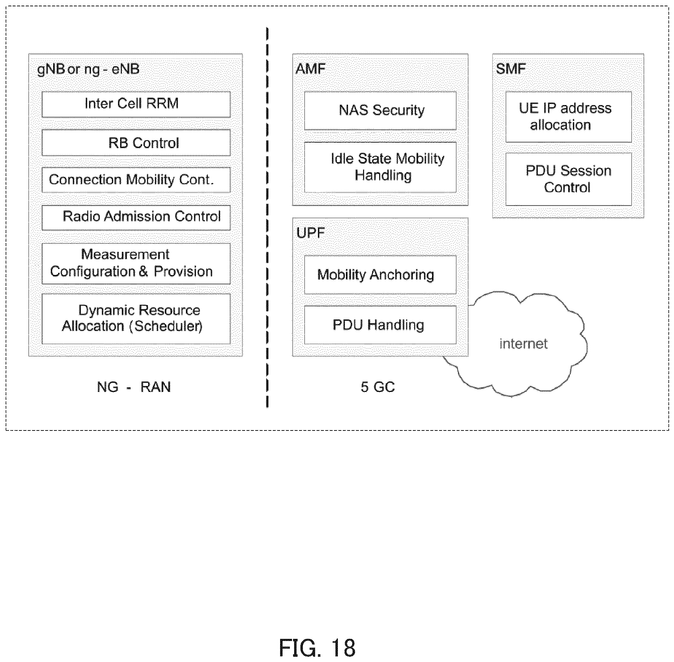

FIG. 18 illustrates the functional split between the NG-RAN and the 5GC. A logical node of the NG-RAN is gNB or ng-eNB. The 5GC includes logical nodes AMF, UPF, and SMF.

For example, gNB and ng-eNB hosts the following main functions:

- Radio Resource Management functions such as Radio Bearer Control, Radio Admission Control, Connection Mobility Control, and dynamic allocation (scheduling) of both uplink and downlink resources to a UE;
- IP header compression, encryption, and integrity protection of data;
- Selection of an AMF during UE attachment in such a case when no routing to an AMF can be determined from the information provided by the UE;
- Routing user plane data towards the UPF;
- Routing control plane information towards the AMF;
- Connection setup and release;
- Scheduling and transmission of paging messages;
- Scheduling and transmission of system broadcast information (originated from the AMF or an operation management maintenance function (OAM: Operation, Admission, Maintenance));
- Measurement and measurement reporting configuration for mobility and scheduling;
- Transport level packet marking in the uplink;
- Session management;
- Support of network slicing;
- QoS flow management and mapping to data radio bearers;
- Support of UEs in the RRC_INACTIVE state;
- Distribution function for NAS messages;
- Radio access network sharing;
- Dual connectivity; and
- Tight interworking between NR and E-UTRA.

The Access and Mobility Management Function (AMF) hosts the following main functions:

- Function of Non-Access Stratum (NAS) signaling termination;
- NAS signaling security;
- Access Stratum (AS) security control;
- Inter-Core Network (CN) node signaling for mobility between 3GPP access networks;
- Idle mode UE reachability (including control and execution of paging retransmission);
- Registration area management;
- Support of intra-system and inter-system mobility;
- Access authentication;
- Access authorization including check of roaming rights;
- Mobility management control (subscription and policies);
- Support of network slicing; and
- Session Management Function (SMF) selection.

In addition, the User Plane Function (UPF) hosts the following main functions:

- Anchor Point for intra-/inter-RAT mobility (when applicable);
- External Protocol Data Unit (PDU) session point for interconnection to a data network;
- Packet routing and forwarding;
- Packet inspection and a user plane part of Policy rule enforcement;
- Traffic usage reporting;
- Uplink classifier to support routing traffic flows to a data network;
- Branching point to support multi-homed PDU session;
- QoS handling for user plane (e.g., packet filtering, gating, UL/DL rate enforcement);
- Uplink traffic verification (SDF to QoS flow mapping); and
- Function of downlink packet buffering and downlink data notification triggering.

Finally, the Session Management Function (SMF) hosts the following main functions:

- Session management;
- UE IP address allocation and management;
- Selection and control of UPF;
- Configuration function for traffic steering at the User Plane Function (UPF) to route traffic to a proper destination;
- Control part of policy enforcement and QoS; and
- Downlink data notification.

<RRC Connection Setup and Reconfiguration Procedure>

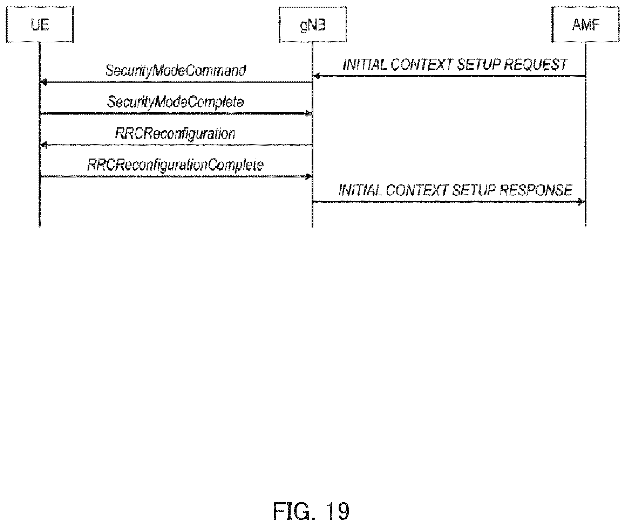

FIG. 19 illustrates some interactions between a UE, gNB, and AMF (a 5GC Entity) performed in the context of a transition of the UE from RRC_IDLE to RRC_CONNECTED for the NAS part (see TS 38 300 v15.6.0).

The RRC is higher layer signaling (protocol) used to configure the UE and gNB. With this transition, the AMF prepares UE context data (which includes, for example, a PDU session context, security key, UE Radio Capability, UE Security Capabilities, and the like) and sends it to the gNB with an INITIAL CONTEXT SETUP REQUEST. Then, the gNB activates the AS security with the UE. This activation is performed by the gNB transmitting to the UE a Security-ModeCommand message and by the UE responding to the gNB with the SecurityModeComplete message. Afterwards, the gNB performs the reconfiguration to setup the Signaling Radio Bearer 2 (SRB2) and Data Radio Bearer(s) (DRB(s)) by means of transmitting to the UE the RRCReconfiguration message and, in response, receiving by the gNB the RRCReconfigurationComplete from the UE. For a signaling-only connection, the steps relating to the RRCReconfiguration are skipped since SRB2 and DRBs are not set up. Finally, the gNB indicates the AMF that the setup procedure is completed with INITIAL CONTEXT SETUP RESPONSE.

Thus, the present disclosure provides a 5th Generation Core (5GC) entity (e.g., AMF, SMF, or the like) including control circuitry, which, in operation, establishes a Next Generation (NG) connection with a gNodeB, and a transmitter, which in operation, transmits an initial context setup message to the gNodeB via the NG connection such that a signaling radio bearer between the gNodeB and a User Equipment (UE) is set up. Specifically, the gNodeB transmits Radio Resource Control (RRC) signaling including a resource allocation configuration Information Element (IE) to the UE via the signaling radio bearer. Then, the UE performs an uplink transmission or a downlink reception based on the resource allocation configuration.

<Usage Scenarios of IMT for 2020 and beyond>

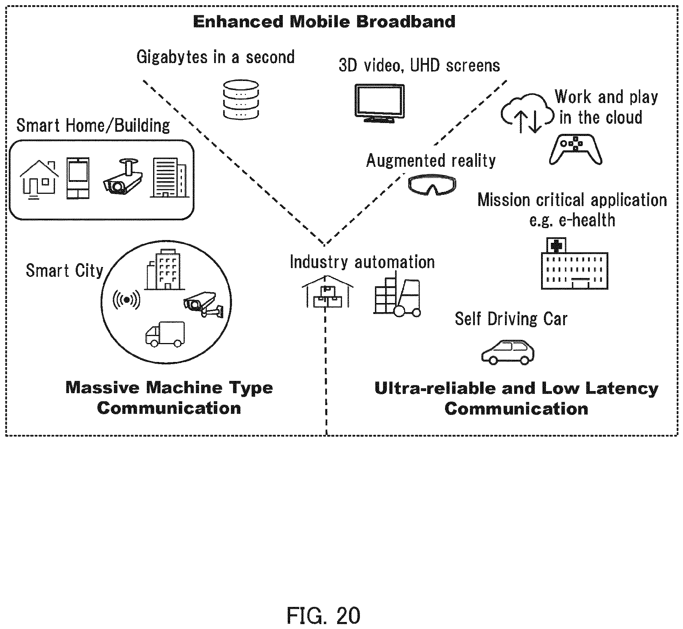

FIG. 20 illustrates some of the use cases for 5G NR. In 3rd generation partnership project new radio (3GPP NR), three use cases are being considered that have been envisaged to support a wide variety of services and applications by IMT-2020. The specification for the phase 1 of enhanced mobile-broadband (eMBB) has been concluded. In addition to further extending the eMBB support, the current and future work would involve the standardization for ultra-reliable and low-latency communications (URLLC) and massive machine-type communications (mMTC). FIG. 20 illustrates some examples of envisioned usage scenarios for IMT for 2020 and beyond (see e.g., ITU-R M.2083 FIG. 2).

The URLLC use case has stringent requirements for capabilities such as throughput, latency and availability. The URLLC use case has been envisioned as one of the enablers for future vertical applications such as wireless control of industrial manufacturing or production processes, remote medical surgery, distribution automation in a smart grid, transportation safety. Ultra-reliability for URLLC is to be supported by identifying the techniques to meet the requirements set by TR 38.913. For NR URLLC in Release 15, key requirements include a target user plane latency of 0.5 ms for UL (uplink) and 0.5 ms for DL (downlink). The general URLLC requirement for one transmission of a packet is a block error rate (BLER) of 1E-5 for a packet size of 32 bytes with a user plane latency of 1 ms.

From the physical layer perspective, reliability can be improved in a number of possible ways. The current scope for improving the reliability involves defining separate CQI tables for URLLC, more compact DCI formats, repetition of PDCCH, or the like. However, the scope may widen for achieving ultra-reliability as the NR becomes more stable and developed (for NR URLLC key requirements). Particular use cases of NR URLLC in Rel. 15 include Augmented Reality/Virtual Reality (AR/VR), e-health, e-safety, and mission-critical applications.

Moreover, technology enhancements targeted by NR URLLC aim at latency improvement and reliability improvement. Technology enhancements for latency improvement include configurable numerology, non slot-based scheduling with flexible mapping, grant free (configured grant) uplink, slot-level repetition for data channels, and downlink pre-emption. Pre-emption means that a transmission for which resources have already been allocated is stopped, and the already allocated resources are used for another transmission that has been requested later, but has lower latency/higher priority requirements. Accordingly, the already granted transmission is pre-empted by a later transmission. Pre-emption is applicable independent of the particular service type. For example, a transmission for a service-type A (URLLC) may be pre-empted by a transmission for a service type B (such as eMBB). Technology enhancements with respect to reliability improvement include dedicated CQI/MCS tables for the target BLER of 1E-5.

The use case of mMTC (massive machine type communication) is characterized by a very large number of connected devices typically transmitting a relatively low volume of non-latency sensitive data. Devices are required to be low cost and to have a very long battery life. From NR perspective, utilizing very narrow bandwidth parts is one possible solution to have power saving from UE perspective and enable long battery life.

As mentioned above, it is expected that the scope of reliability in NR becomes wider. One key requirement to all the cases, for example, for URLLC and mMTC, is high reliability or ultra-reliability. Several mechanisms can improve the reliability from radio perspective and network perspective. In general, there are a few key potential areas that can help improve the reliability. Among these areas are compact control channel information, data/control channel repetition, and diversity with respect to frequency, time and/or the spatial domain. These areas are applicable to reliability improvement in general, regardless of particular communication scenarios.

For NR URLLC, further use cases with tighter requirements have been envisioned such as factory automation, transport industry and electrical power distribution. The tighter requirements are higher reliability (up to 10-6 level), higher availability, packet sizes of up to 256 bytes, time synchronization up to the extent of a few $\mu$s (where the value can be one or a few $\mu$s depending on frequency range and short latency on the order of 0.5 to 1 ms (in particular a target user plane latency of 0.5 ms), depending on the use cases).

Moreover, for NR URLLC, several technology enhancements from physical layer perspective have been identified. Among these are PDCCH (Physical Downlink Control Channel) enhancements related to compact DCI, PDCCH repetition, increased PDCCH monitoring. Moreover, UCI (Uplink Control Information) enhancements are related to enhanced HARQ (Hybrid Automatic Repeat Request) and CSI feedback enhancements. Also PUSCH enhancements related to mini-slot level hopping and retransmission/repetition enhancements are possible. The term "mini-slot" refers to a Transmission Time Interval (TTI) including a smaller number of symbols than a slot (a slot comprising fourteen symbols).

<QoS Control>

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU sessions. For each UE, the NG-RAN establishes at least one Data Radio Bearer (DRB) together with the PDU session, e.g., as illustrated above with reference to FIG. 19. Further, additional DRB(s) for QoS flow(s) of that PDU session can be subsequently configured (it is up to NG-RAN when to do so). The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

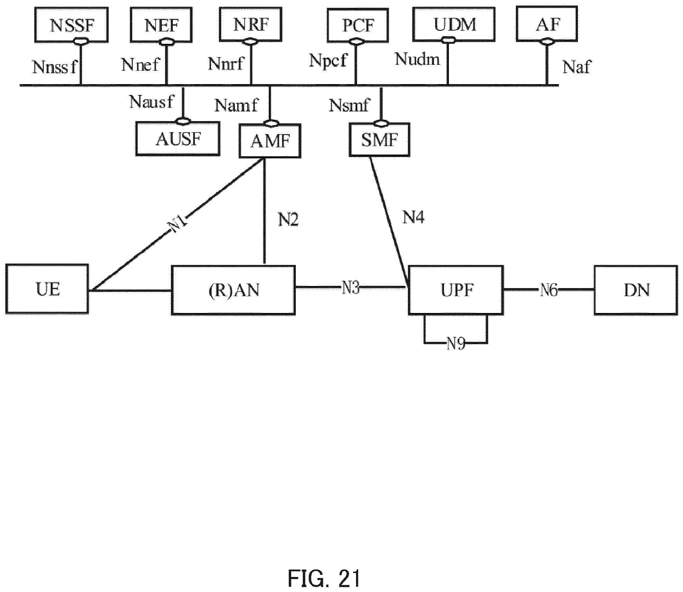

FIG. 21 illustrates a 5G NR non-roaming reference architecture (see TS 23.501 v16.1.0, section 4.23). An Application Function (AF) ( e.g., an external application server hosting 5G services, exemplarily described in FIG. 20) interacts with the 3GPP Core Network in order to provide services, for example to support application influencing on traffic routing, accessing Network Exposure Function (NEF) or interacting with the policy framework for policy control (e.g., QoS control) (see Policy Control Function, PCF). Based on operator deployment, Application Functions considered to be trusted by the operator can be allowed to interact directly with relevant Network Functions. Application Functions not allowed by the operator to access directly the Network Functions use the external exposure framework via the NEF to interact with relevant Network Functions.

FIG. 21 illustrates further functional units of the 5G architecture, namely Network Slice Selection Function (NSSF), Network Repository Function (NRF), Unified Data Management (UDM), Authentication Server Function (AUSF), Access and Mobility Management Function (AMF), Session Management Function (SMF), and Data Network (DN, e.g., operator services, Internet access, or third party services). All of or a part of the core network functions and the application services may be deployed and running on cloud computing environments.

In the present disclosure, thus, an application server (e.g., AF of the 5G architecture), is provided that includes: a transmitter, which in operation, transmits a request containing a QoS requirement for at least one of URLLC, eMMB and mMTC services to at least one of functions (such as NEF, AMF, SMF, PCF, and UPF) of the 5GC to establish a PDU session including a radio bearer between a gNodeB and a UE in accordance with the QoS requirement; and control circuitry, which, in operation, performs the services using the established PDU session.

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto.

The LSI herein may be referred to as an IC, a system LSI, a super LSI, or an ultra LSI depending on a difference in the degree of integration.

However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing.

If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus. The communication apparatus may comprise a transceiver and processing/control circuitry. The transceiver may comprise and/or function as a receiver and a transmitter. The transceiver, as the transmitter and receiver, may include an RF (radio frequency) module and one or more antennas. The RF module may include an amplifier, an RF modulator/demodulator, or the like. Some non-limiting examples of such a communication apparatus include a phone (e.g., cellular (cell) phone, smart phone), a tablet, a personal computer (PC) (e.g., laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g., an appliance, lighting, smart meter, control panel), a vending machine, and any other "things" in a network of an "Internet of Things (IoT)."

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as, e.g., a base station, an access point, and any other apparatus, device or system that communicates with or controls apparatuses such as those in the above non-limiting examples.

A communication apparatus according to an exemplary embodiment of the present disclosure includes: control circuitry, which, in operation, determines a reading position of encoded data of a signal in a first section of a plurality of sections in a time-domain resource allocated for transmission of the signal, based on a resource amount that does not depend on a reading result of the encoded data in a second section before the first section; and transmission circuitry, which, in operation, transmits the signal, based on the reading position.

In an exemplary embodiment of the present disclosure, the resource amount is a resource amount that does not depend on the presence or absence of multiplexing of uplink control information.

In an exemplary embodiment of the present disclosure, the resource amount is a resource amount that does not depend on whether the transmission of the signal is dropped.

In an exemplary embodiment of the present disclosure, the control circuitry determines the reading position based on a number of encoded bits and an index of the first section of the plurality of sections, the number of encoded bits corresponding to the resource amount.

In an exemplary embodiment of the present disclosure, the control circuitry determines the reading position based on a number of encoded bits and an index of the first section in a certain section of the plurality of sections, the number of encoded bits corresponding to the resource amount, the certain section being different from a section in which the transmission of the signal is dropped.

In an exemplary embodiment of the present disclosure, the control circuitry varies a determination method of the resource amount, depending on whether a head section in the time-domain resource is a Special slot.

In an exemplary embodiment of the present disclosure, the control circuitry determines the reading position in each of the plurality of sections, based on a ratio between a number of symbols that is used for the transmission of the signal in the section and a reference value relating to a number of symbols.

In an exemplary embodiment of the present disclosure, the control circuitry configures the resource amount individually for each of the plurality of sections.

In an exemplary embodiment of the present disclosure, the time-domain resource includes at least one group that is composed of one section or a plurality of sections that are consecutive, and the reading position in a head section in the group is a specified position.

In an exemplary embodiment of the present disclosure, the time-domain resource includes at least one group that is composed of one section or a plurality of sections that are consecutive, and the reading position in a head section in the group is determined based on the resource amount.

In an exemplary embodiment of the present disclosure, the control circuitry uses, in calculation of the resource amount, a value used for calculation of a transport block size of the signal.

A communication apparatus according to an exemplary embodiment of the present disclosure includes: control circuitry, which, in operation, determines a reading position of encoded data of a signal in a first section of a plurality of sections in a time-domain resource allocated for transmission of the signal, based on a resource amount that does not depend on a reading result of the encoded data in a second section before the first section; and transmission circuitry, which, in operation, receives the signal, based on the reading position.

A communication method according to an exemplary embodiment of the present disclosure includes: determining, by a communication apparatus, a reading position of encoded data of a signal in a first section of a plurality of sections in a time-domain resource allocated for transmission of the signal, based on a resource amount that does not depend on a reading result of the encoded data in a second section before the first section; and transmitting, by the communication apparatus, the signal, based on the reading position.

A communication method according to an exemplary embodiment of the present disclosure includes: determining, by a communication apparatus, a reading position of encoded data of a signal in a first section of a plurality of sections in a time-domain resource allocated for transmission of the signal, based on a resource amount that does not depend on a reading result of the encoded data in a second section before the first section; and receiving, by the communication apparatus, the signal, based on the reading position.

The disclosure of Japanese Patent Application No. 2021-126687, filed on August 2, 2021, including the specification, drawings and abstract, is incorporated herein by reference in its entirety.

Industrial Applicability

An exemplary embodiment of the present disclosure is useful for radio communication systems.

Reference Signs List

100 Base station
101, 205 Controller
102 Higher-layer control signal generator
103 Downlink control information generator
104, 206 Encoder
105, 207 Modulator
106, 208 Signal assigner
107, 209 Transmitter
108, 201 Receiver
109, 202 Extractor
110, 203 Demodulator
111, 204 Decoder
200 Terminal

**Claims**

1. A communication apparatus, comprising:

   control circuitry, which, in operation, determines a reading position of encoded data of a signal in a first section of a plurality of sections in a time-domain resource allocated for transmission of the signal, based on a resource amount that does not depend on a reading result of the encoded data in a second section before the first section; and
   transmission circuitry, which, in operation, transmits the signal, based on the reading position.

2. The communication apparatus according to claim 1, wherein the resource amount is a resource amount that does not depend on the presence or absence of multiplexing of uplink control information.

3. The communication apparatus according to claim 1, wherein the resource amount is a resource amount that does not depend on whether the transmission of the signal is dropped.

4. The communication apparatus according to claim 1, wherein the control circuitry determines the reading position based on a number of encoded bits and an index of the first section of the plurality of sections, the number of encoded bits corresponding to the resource amount.

5. The communication apparatus according to claim 1, wherein the control circuitry determines the reading position based on a number of encoded bits and an index of the first section in a certain section of the plurality of sections, the number of encoded bits corresponding to the resource amount, the certain section being different from a section in which the transmission of the signal is dropped.

6. The communication apparatus according to claim 1, wherein the control circuitry varies a determination method of the resource amount, depending on whether a head section in the time-domain resource is a Special slot.

7. The communication apparatus according to claim 1, wherein the control circuitry determines the reading position in each of the plurality of sections, based on a ratio between a number of symbols that is used for the transmission of the signal in the section and a reference value relating to a number of symbols.

8. The communication apparatus according to claim 1, wherein the control circuitry configures the resource amount individually for each of the plurality of sections.

9. The communication apparatus according to claim 1, wherein:

the time-domain resource includes at least one group that is composed of one section or a plurality of sections that are consecutive, and
the reading position in a head section in the group is a specified position.

10. The communication apparatus according to claim 1, wherein:

the time-domain resource includes at least one group that is composed of one section or a plurality of sections that are consecutive, and
the reading position in a head section in the group is determined based on the resource amount.

11. The communication apparatus according to claim 1, wherein the control circuitry uses, in calculation of the resource amount, a value used for calculation of a transport block size of the signal.

12. A communication apparatus, comprising:

control circuitry, which, in operation, determines a reading position of encoded data of a signal in a first section of a plurality of sections in a time-domain resource allocated for transmission of the signal, based on a resource amount that does not depend on a reading result of the encoded data in a second section before the first section; and
reception circuitry, which, in operation, receives the signal, based on the reading position.

13. A communication method, comprising:

determining, by a communication apparatus, a reading position of encoded data of a signal in a first section of a plurality of sections in a time-domain resource allocated for transmission of the signal, based on a resource amount that does not depend on a reading result of the encoded data in a second section before the first section; and
transmitting, by the communication apparatus, the signal, based on the reading position.

14. A communication method, comprising:

determining, by a communication apparatus, a reading position of encoded data of a signal in a first section of a plurality of sections in a time-domain resource allocated for transmission of the signal, based on a resource amount that does not depend on a reading result of the encoded data in a second section before the first section;

and
receiving, by the communication apparatus, the signal, based on the reading position.

TDD slot structure

| UL slot | UL slot | DL slot | UL slots | UL slot |
| --- | --- | --- | --- | --- |

TOT                                                          TOT

Time domain resource allocated for TBoMS

FIG. 1

EP 4 383 659 A1

FIG. 2

FIG. 3

FIG. 4

FIG. 5

100

101                               108

| CONTROLLER | → | RECEIVER |

FIG. 6

200

205                               209

| CONTROLLER | → | TRANSMITTER |

FIG. 7

100

DL DATA SIGNAL → ENCODER (104) → MODULATOR (105) → SIGNAL ASSIGNER (106) → TRANSMITTER (107) → antenna

FROM CONTROLLER 101 → ENCODER (104)

FROM CONTROLLER 101 → MODULATOR (105)

HIGHER-LAYER CONTROL SIGNAL GENERATOR (102)

DOWNLINK CONTROL INFORMATION GENERATOR (103)

CONTROLLER (101)

antenna → RECEIVER (108) → EXTRACTOR (109) → DEMODULATOR (110) → DECODER (111) → UL DATA SIGNAL

FIG. 8

UL DATA SIGNAL → | ENCODER 206 | → | MODULATOR 207 | → | SIGNAL ASSIGNER 208 | → | TRANSMITTER 209 |

| CONTROLLER 205 |

DL DATA SIGNAL ← | DECODER 204 | ← | DEMODULATOR 203 | ← | EXTRACTOR 202 | ← | RECEIVER 201 |

FIG. 9

EP 4 383 659 A1

EP 4 383 659 A1

```
                    ┌──────────────┐
                    │    Start     │
                    └──────┬───────┘
                           │            S101
                    ┌──────▼─────────────────────┐
                    │ Indicate PUSCH transmission │
                    │        by TBoMS             │
                    └──────┬─────────────────────┘
                           │            S102
                    ┌──────▼─────────────────────┐
                    │  Determine reference resource │
                    └──────┬─────────────────────┘
                           │            S103
                    ┌──────▼─────────────────────┐
                    │ Determine the number of     │
                    │   reference encoded bits    │
                    └──────┬─────────────────────┘
                           │            S104
                    ┌──────▼─────────────────────┐
                    │ Determine variable RV       │
                    │   position in each slot     │
                    └──────┬─────────────────────┘
                           │            S105
                    ┌──────▼─────────────────────┐
                    │      Rate matching          │
                    └──────┬─────────────────────┘
                           │            S106
                    ┌──────▼─────────────────────┐
                    │  Transmit PUSCH by TBoMS    │
                    └──────┬─────────────────────┘
                           │
                    ┌──────▼───────┐
                    │     End      │
                    └──────────────┘
```

FIG. 10

FIG. 11

FIG. 12

EP 4 383 659 A1

Time domain resource allocated for TBoMS

FIG. 13

EP 4 383 659 A1

EP 4 383 659 A1

| Slot #0 | Slot #1 | Slot #2 | Slot #3 |
|---------|---------|---------|---------|
| UL slot | Special slot | UL slot | UL slot |

FIG. 14

EP 4 383 659 A1

| 1st slot (n=0) | 2nd slot (n=1) | 3rd slot (n=2) | 4th slot (n=3) |
|---|---|---|---|

U U U U U U U U U U U U U U U U U U U U F F F F F F F F F F U U U U U U U U U U U U U U U F F U U U U U U U U U U U U U U

TOT

Time domain resource allocated for TBoMS

FIG. 15

| $rv_{id}$ indicated by the DCI scheduling the PUSCH | $rv_{id}$ to be applied to the first slot in the m-th TOT | | | |
|---|---|---|---|---|
| | m mod 4 = 0 | m mod 4 = 1 | m mod 4 = 2 | m mod 4 = 3 |
| 0 | 0 | 2 | 3 | 1 |
| 2 | 2 | 3 | 1 | 0 |
| 3 | 3 | 1 | 0 | 2 |
| 1 | 1 | 0 | 2 | 3 |

FIG. 16

FIG. 17

gNB or ng - eNB

Inter Cell RRM

RB Control

Connection Mobility Cont.

Radio Admission Control

Measurement
Configuration & Provision

Dynamic Resource
Allocation (Scheduler)

NG - RAN

AMF

NAS Security

Idle State Mobility
Handling

UPF

Mobility Anchoring

PDU Handling

5 GC

SMF

UE IP address
allocation

PDU Session
Control

internet

FIG. 18

FIG. 19

**Enhanced Mobile Broadband**

Gigabytes in a second

3D video, UHD screens

Work and play in the cloud

Smart Home/Building

Augmented reality

Mission critical application e.g. e-health

Smart City

Industry automation

Self Driving Car

**Massive Machine Type Communication**

**Ultra-reliable and Low Latency Communication**

FIG. 20

FIG. 21

## INTERNATIONAL SEARCH REPORT

International application No.

**PCT/JP2022/019551**

### A. CLASSIFICATION OF SUBJECT MATTER

*H04L 27/26*(2006.01)i; *H04L 1/08*(2006.01)i; *H04W 72/04*(2009.01)i; *H04W 72/10*(2009.01)i
FI:   H04L27/26 110; H04L1/08; H04W72/04 132; H04W72/10

According to International Patent Classification (IPC) or to both national classification and IPC

### B. FIELDS SEARCHED

Minimum documentation searched (classification system followed by classification symbols)
H04L27/26; H04L1/08; H04W72/04; H04W72/10

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2010-528554 A (SAMSUNG ELECTRONICS CO., LTD.) 19 August 2010 (2010-08-19) paragraphs [0008], [0009], [0021], [0039]-[0054], fig. 2, 5, 9, 11-17 | 1-5, 7-10, 12-14 |
| Y | | 1-14 |
| Y | Moderator (NOKIA, NOKIA SHANGHAI BELL.), Final FL summary of TB processing over multi-slot PUSCH (AI 8.8.1.2) [online]. 3GPP TSG RAN WG1 #105-e R1-2106251. May 2021 sections 2.1.3.1, 2.2.3, 2.4.9 | 1-14 |
| Y | SHARP. TB processing over multi-slot PUSCH [online]. 3GPP TSG RAN WG1 #104b-e R1-2103480. April 2021 sections 2.1, 2.3, fig. 1-3 | 1-14 |

☐ Further documents are listed in the continuation of Box C.  ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **29 July 2022** | **09 August 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

## INTERNATIONAL SEARCH REPORT
### Information on patent family members

International application No.

**PCT/JP2022/019551**

| Patent document cited in search report | | | Publication date (day/month/year) | Patent family member(s) | Publication date (day/month/year) |
|---|---|---|---|---|---|
| JP | 2010-528554 | A | 19 August 2010 | US 2009/0003486 A1 paragraphs [0017]-[0021], [0061], [0089]-[0130], fig. 2, 5, 9, 11-17<br>WO 2008/147123 A1<br>KR 10-2008-0105006 A<br>CN 101682484 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2021126687 A

### Non-patent literature cited in the description

- NR Base Station (BS) radio transmission and reception (Release 15). *3GPP TS38.104 V15.14.0,* June 2021
- **CHINA TELECOM.** New WID on NR coverage enhancements. *3GPP TSG RAN Meeting #90e, RP-202928,* December 2020
- NR Physical channels and modulation (Release 16). *3GPP TS38.211 V16.6.0,* June 2021
- NR Multiplexing and channel coding (Release 16). *3GPP TS38.212 V16.6.0,* June 2021
- NR Physical layer procedures for control (Release 16). *3GPP TS38.213 V16.6.0,* June 2021
- NR Physical layer procedures for data (Release 16). *3GPP TS38.214 V16.6.0,* June 2021
- NR Radio Resource Control (RRC) protocol specification (Release 16). *3GPP TS38.331 V16.5.0,* June 2021
- **NOKIA ; NOKIA SHANGHAI BELL.** Final FL summary of TB processing over multi-slot PUSCH (AI 8.8.1.2). *3GPP TSG RAN WG1 #105-e, R1-2106251,* May 2021
- **QUALCOMM INCORPORATED.** TB processing over multi-slot PUSCH. *3GPP TSG RAN WG1 #104-bis-e, R1-2104686,* May 2021
- **HUAWEI ; HISILICON.** Discussion on TB processing over multi-slot PUSCH. *3GPP TSG RAN WG1 #105-e, R1-2104242,* May 2021